# EUROPÄISCHE PATENTSCHRIFT

(11) **EP 3 526 469 B1**
(45) Veröffentlichungstag und Bekanntmachung des Hinweises auf die Patenterteilung: **18.11.2020**
(21) Anmeldenummer: 17807701.2
(22) Anmeldetag: 17.11.2017
(51) Int. Cl.: F03D 7/02, F03D 80/00, F03D 17/00, F03D 7/04

(54) **VERSTELL- UND/ODER ANTRIEBSEINHEIT, WINDKRAFTANLAGE MIT EINER SOLCHEN VERSTELL- UND/ODER ANTRIEBSEINHEIT UND VERFAHREN ZUM STEUERN EINER SOLCHEN VERSTELL- UND/ODER ANTRIEBSEINHEIT**
ADJUSTMENT AND/OR DRIVE UNIT, WIND TURBINE HAVING SUCH AN ADJUSTMENT AND/OR DRIVE UNIT, AND METHOD FOR CONTROLLING SUCH AN ADJUSTMENT AND/OR DRIVE UNIT
UNITÉ DE RÉGLAGE ET/OU D'ENTRAÎNEMENT, ÉOLIENNE MUNIE DE LADITE UNITÉ DE RÉGLAGE ET/OU D'ENTRAÎNEMENT ET PROCÉDÉ DE COMMANDE DE LADITE UNITÉ DE RÉGLAGE ET/OU D'ENTRAÎNEMENT

(30) Priorität: 18.11.2016 WO PCT/EP2016/001926
(43) Veröffentlichungstag der Anmeldung: 21.08.2019
(73) Patentinhaber: Liebherr-Components Biberach GmbH, 88400 Biberach an der Riß (DE)
(72) Erfinder: MÜLLER, Johannes, 86647 Buttenwiesen (DE); DAHL, Martin, 5430 Wettingen (CH); WENNHELLER, Oliver, 88299 Leutkirch (DE); CHRIST, Clemens, 88400 Biberach (DE); FENKER, Oliver, 88447 Warthausen (DE)
(74) Vertreter: Thoma, Michael
(86) Internationale Anmeldenummer: PCT/EP2017/001357
(87) Internationale Veröffentlichungsnummer: WO 2018/091144

(56) Entgegenhaltungen:
- EP-A1- 2 781 738
- WO-A1-2012/000504
- DE-C1- 10 023 440
- JP-A- 2007 518 939

## Beschreibung

Die vorliegende Erfindung betrifft Verstell- und/oder Antriebseinheiten wie sie bei Windkraftanlagen zum Einstellen des Azimut-Winkels der Windkraftanlagengondel oder des Pitch-Winkels der Rotorblätter eingesetzt oder bei anderen großen Drehwerken wie beispielsweise dem Drehwerk eines Krans oder eines Baggers werden können, wobei eine solche Verstell- und/oder Antriebseinheit zumindest zwei Stellantriebe zum Verdrehen zweier zueinander verdrehbar gelagerter Baugruppen sowie eine Steuereinrichtung zum Ansteuern der Stellantriebe aufweist, die die Stellantriebe derart ansteuert, dass die Stellantriebe beim Verdrehen der beiden Baugruppen und/oder im Stillstand der Baugruppen zueinander verspannt werden. Die Erfindung betrifft ferner eine Windkraftanlage mit einer solchen Verstell- und/oder Antriebseinheit sowie ein Verfahren zum Steuern einer solchen Verstell- und/oder Antriebseinheit.

Windkraftanlagen mit solchen Verstelleinheiten sind beispielsweise aus den Schriften WO 2012/000504 A1, DE 10 023 440 C1, JP 2007 5189 39 A und EP 27 81 738 A1 bekannt.

Bei großen Drehantrieben, die großen äußeren Lasten unterworfen sind, wie dies beispielsweise bei Azimut-Verstellantrieben von Windkraftanlagen oder dem Drehwerk eines Derrick-Krans der Fall ist, werden üblicherweise mehrere Stellantriebe verwendet, die gemeinsam die beiden zu verdrehenden Baugruppen verstellen. Die Stellantriebe können hierbei einen Motor, beispielsweise in Form eines Elektromotors umfassen, der über ein Getriebe, beispielsweise ein Planetengetriebe ein Antriebsrad wie ein Ritzel antreibt, das in einen Zahnkranz eingreift, um den Zahnkranz zu verdrehen. Die zu verstellenden Baugruppen können beispielsweise die beiden Lagerringe eines Großwälz- und/oder - gleitlagers sein, mittels dessen die Gondel oder ein die Gondel tragendes Turmstück um eine aufrechte Achse drehbar am Turm der Windkraftanlage gelagert oder die Drehbühne eines Derrick-Krans auf dessen Raupenfahrwerk gelagert wird. Durch Verdrehen der beiden Lagerringe kann dann die Gondel gegenüber dem Turm bzw. die Drehbühne gegenüber dem Unterwagen verdreht werden.

Aufgrund von Spiel in den Verzahnungen kommt es hierbei zu Beweglichkeiten in den Antriebssträngen, so dass trotz Verwendung mehrerer Stellantriebe die Gondel bzw. die Drehbühne mit einer unerwünschten Dynamik reagieren kann, beispielsweise in Form rotatorischer Schwingungen. Die genannten Beweglichkeiten und Elastizitäten im Antriebsstrang können hierbei vielfältige Ursachen haben, beispielsweise - neben Zahnspiel im Zahneingriff zwischen Ritzel und Zahnkranz - auch Nachgiebigkeiten in den verwendeten Getrieben oder Nachgiebigkeiten in der Lagerung der Stellantriebe, die üblicherweise an entsprechenden Maschinenträgern befestigt sind, die nur eine begrenzte Steifigkeit besitzen.

Um aufgrund solcher Beweglichkeiten keine zu großen dynamischen Auswirkungen bei der Gondelverstellung von Windkraftanlagen zu haben, ist es bislang üblich, eine beispielsweise hydraulische Betriebsbremse einzusetzen und die Verstellung der Baugruppen zueinander gegen eine gewisse Bremskraft zu fahren, d.h. die Betriebsbremse ist beim Verstellen angelegt und stellt eine gewisse Bremskraft bereit, die von den Stellantrieben überwunden wird. Hierdurch können unerwünschte dynamische Schwankungen aufgrund von Elastizitäten im Antriebsstrang kontrolliert und unterdrückt werden. Nachteilig ist hieran jedoch, dass ein erhöhter Verschleiß an den Antrieben eintreten kann, die Stellantriebe an sich überdimensioniert werden müssen, um nicht nur die Verstellkräfte per se aufbringen zu können, sondern auch noch die Bremskraft überwinden zu können, und ferner die Betriebsbremse per se entsprechend ausgelegt und Bauraum hierfür bereitgestellt werden muss. Gleichzeitig unterliegt die Betriebsbremse starkem Verschleiß und Wartungsaufwand.

Es wurde andererseits auch bereits vorgeschlagen, auf eine solche Betriebsbremse zu verzichten bzw. die Verstellbewegung ohne die Bremskraft einer Betriebsbremse auszuführen und stattdessen die Stellantriebe gegeneinander zu verspannen. Ein solches Verspannen der Stellantriebe der Azimut-Verstelleinrichtung einer Windkraftanlage zeigt beispielsweise die Schrift DE 10 2008 013 864 B4. Darin wird vorgeschlagen, das geforderte Gesamtantriebsmoment in der Hauptachse auf die mehreren Stellantriebe unterschiedlich aufzuteilen, wobei mindestens einer der Stellantriebe mit einem kleinen Gegenmoment der Soll-Drehrichtung entgegenwirkt, um eine Verspannung der Stellantriebe gegeneinander zu realisieren. Hierzu werden den Stellantrieben unterschiedliche Soll-Drehzahlen mit einer Drehzahldifferenz im Bereich von 20 bis 100 Umdrehungen pro Minute vorgegeben, um ein entgegengerichtetes Drehmoment zu erzeugen, das größenordnungsmäßig 5-10% des Antriebsmoments der anderen Verstellantriebe betragen soll.

Aus der EP 22 90 230 B1 ist ferner ein Azimut-Verstellsystem für die Gondel einer Windkraftanlage bekannt, das mit einer Mehrzahl von Stellantrieben arbeitet, denen jeweils ein eigener Controller zugeordnet ist, die untereinander sowie mit einem übergeordneten Steuerungscontroller kommunizieren. Dabei sollen in einem ersten Betriebsmodus alle Stellantriebe in dieselbe Drehrichtung arbeiten, um die Gondel in den Wind zu drehen, während die Stellantriebe in einem zweiten Betriebsmodus, in dem die Gondel im rotatorischen Stillstand festgehalten werden soll, gegeneinander verspannt werden.

Weitere Stellantriebssysteme für Gondeln von Windkraftanlagen sind aus den Schriften DE 10 2007 049 386 A1, DE 10 2013 207 322 und US 2007/0158926 A1 bekannt.

Mit einem solchen verspannten Betrieb der mehreren Stellantriebe können die unerwünschten Dynamikeffekte durch Spiel im Antriebsstrang zwar zu einem gewissen Grad reduziert werden. Unter ungünstigen Bedingungen wie beispielsweise hohen wechselnden Belastungen kann es jedoch trotzdem zu einem Aufschaukeln bzw. zu einer ungenügenden Unterdrückung der Dynamikeffekte kommen. Andererseits werden die Stellantriebe und der Antriebsstrang in ruhigen, bspw. windarmen Phasen, in denen an sich keine größere Dämpfung dynamischer Effekte notwendig wäre, unnötig belastet, wodurch vorzeitiger Verschleiß eintreten kann.

Zum anderen kann es bei solchen Stellantriebssystemen zu Überlastungen kommen, die zu Schäden an einzelnen Stellantrieben oder Zerstörung von Bauteilen führen können. Da bei einer Anlage mit mehreren Stellantrieben, die kraftschlüssig im Einsatz sind, die einzelnen Stellantriebe nicht so ausgelegt werden können, dass sie jeweils einzeln die gesamte Kraft übertragen, kann es bei unsymmentrischen Belastungen zur Überlastung eines Antriebs kommen. Würde jeder Antrieb einzeln so ausgelegt werden, dass er alleine die gesamte Maximalbelastung übertragen kann, wäre die Anlage insgesamt drastisch überdimensioniert. Die Stellantriebe werden daher in der Regel so ausgelegt, dass sie gemeinsam die Stellkräfte aufbringen und die insgesamt benötigten Stellmomente und -kräfte verteilt werden.

Bei den vorgenannten, möglichen Überbelastungen kann es zum Teil an schwierig zu ersetzenden Bauteilen zu Zerstörungen kommen, wobei der größte Schaden dadurch entsteht, dass der Bereich zerstört wird, in den alle Antriebe ihre Kräfte einleiten, da dann auch ein Notbetrieb mittels einiger Stellantriebe nicht mehr möglich ist. Bei einem Zahnkranzantrieb der vorgenannten Art wie er bei Azimut-Modulen von Windkraftanlagen oder großen Drehwerken beispielsweise von Kranen eingesetzt wird, legt insbesondere eine Zerstörung des Zahnkranzes bzw. der Zahnflanken eines solchen Zahnkranzes die gesamte Anlage lahm, wobei es zu sehr langen Stillstandszeiten kommt, da der Ausbau des Zahnkranzes nicht ohne weiteres möglich ist.

Um solche größeren Schäden und längere Stillstandszeiten zu vermeiden, wurde bereits vorgeschlagen, in weniger kritische Bauteile Sollbruchstellen einzubauen, um die kritischeren Bauteile vor Zerstörung zu schützen und das an der Sollbruchstelle zerstörte Bauteil leichter austauschen zu können. Beispielsweise zeigt die Schrift EP 2 280 191 B1 einen Stellantrieb der genannten Art, bei dem der Großzahnkranz dadurch vor Zerstörung geschützt werden soll, dass die Abtriebswellen der Stellantriebe eine Sollbruchstelle aufweisen, beispielsweise in Form einer entsprechenden Kerbe unmittelbar in der Abtriebswelle oder einem damit verbundenen Wellenflansch. Die genannte Abtriebswelle sitzt dabei zwischen einem Ritzel, das mit dem Zahnkranz kämmt, und einem Getriebe, über das die genannte Abtriebswelle von einem Elektromotor her angetrieben wird.

Solche mechanischen Sollbruchstellen an der Abtriebswelle der Stellantriebe bewahren zwar den Zahnkranz und auch die Getriebe der Stellantriebe vor Zerstörung bzw. Schäden und es muss nur ein verhältnismäßig einfacheres, billigeres Bauteil ersetzt werden. Dennoch kommt es zu Stillstandszeiten für die Reparatur und entsprechenden Ertragsausfall.

Der vorliegenden Erfindung liegt hiervon ausgehend die Aufgabe zugrunde, eine verbesserte Verstell- und/oder Antriebseinheit, ein verbessertes Verfahren zum Steuern einer solchen Verstell- und/oder Antriebseinheit sowie eine verbesserte Windkraftanlage mit einer solchen Verstell- und/oder Antriebseinheit zu schaffen, die Nachteile des Standes der Technik vermeiden und Letzteren in vorteilhafter Weise weiterbilden. Insbesondere soll ein verlässlicher Überlastungsschutz, der Stillstandszeiten der Verstell- und/oder Antriebseinheit sowie der damit ausgerüsteten Anlage vermeidet oder zumindest verkürzt, erreicht werden. Dabei soll vorzugsweise gleichzeitig eine verbesserte Kompensation der Beweglichkeiten im Antriebsstrang erzielt werden, die auch unter ungünstigen Bedingungen unerwünschte dynamische Wirkungen beim Verstellen der Winkelposition zuverlässig unterdrückt, wobei gleichzeitig die Belastung und der Verschleiß der Stellantriebe und des Antriebsstrangs verringert und eine Lösung mit weniger Stellantrieben ermöglicht wird.

Erfindungsgemäß wird die genannte Aufgabe durch Verstell- und/oder Antriebseinheiten gemäß Anspruch 1, eine Windkraftanlage gemäß Anspruch 20 und ein Verfahren zum Steuern einer solchen Verstell- und/oder Antriebseinheit gemäß Anspruch 21 gelöst. Bevorzugte Ausgestaltungen der Erfindung sind Gegenstand der abhängigen Ansprüche.

Es wird also vorgeschlagen, die Stellantriebe selbst intelligent auszubilden und direkt miteinander kommunizieren zu lassen, um Überlastungen einzelner Stellantriebe schnell und ohne Verzögerung zu vermeiden. Die Belastungssignale, die die individuell erfassten Belastungen der Stellantriebe wiedergeben, werden zumindest dann, wenn sie das Erreichen einer Überlastung eines Stellantriebs angeben, an zumindest einen anderen Stellantrieb oder alle anderen Stellantriebe gesendet und dort von einem dezentralen Steuerbaustein des empfangenden Stellantriebs in ein Hilfsmoment umgesetzt. Meldet ein Stellantrieb eine Überlastung oder zumindest die Annäherung an die Überlastung an die anderen Stellantriebe, verändert zumindest einer der anderen Stellantriebe sein bereitgestelltes Drehmoment um das besagte Hilfsmoment, so dass der Hilfe suchende Stellantrieb entlastet wird. Zum Bereitstellen des Hilfsmoments ist kein Eingriff der zentralen, übergeordneten Steuereinrichtung und auch keine Rückfrage dort notwendig. Durch die direkte Kommunikation der dezentralen Steuerbausteine der Stellantriebe miteinander können Verzögerungen, wie sie bei der Ansteuerung von einer zentralen, übergeordneten Steuereinrichtung und der Kommunikation mit dieser auftreten können, vermieden werden, so dass auftretende Spannungsspitzen, die in einen Überlastungszustand führen würden, besonders effizient abgefangen werden können.

Insbesondere sind die dezentralen Steuerbausteine der Stellantriebe dabei dazu ausgebildet, das genannte Hilfsmoment auch unter zumindest zeitweiliger Missachtung des Solldrehmoments, das von der zentralen, übergeordneten Steuereinrichtung vorgegeben wird, bereitzustellen.

Das besagte Hilfsmoment kann dabei eine Erhöhung des vom Stellantrieb bereitgestellten Drehmoments sein, wenn der Stellantrieb dieselbe Arbeitsrichtung hat wie der Hilfe suchende Stellantrieb. Alternativ kann das Hilfsmoment auch eine Verringerung des Drehmoments des Stellantriebs sein, wenn der genannte Stellantrieb in die entgegengesetzte, d.h. verspannende Richtung wie der Hilfe suchende Stellantrieb arbeitet.

Vorteilhafterweise wird das genannte Hilfsmoment dabei in seiner Höhe variabel an das Belastungssignal des Hilfe suchenden Stellantriebs angepasst. Benötigt der Hilfe suchende Stellantrieb stärkere Unterstützung, kann ein anderer Stellantrieb ein größeres Hilfsmoment bereitstellen. Benötigt der Hilfe suchende Stellantrieb nur eine kleinere Unterstützung, kann das Hilfsmoment kleiner gewählt werden.

Dabei können auch von mehreren Stellantrieben Hilfsmomente bereitgestellt werden, insbesondere dann, wenn ein einzelner, anderer Stellantrieb das benötigte Hilfsmoment alleine nicht aufbringen kann.

Vorteilhafterweise kann jeder dezentrale Steuerungsbaustein eines jeweiligen Stellantriebs eine Auswerteeinrichtung aufweisen, um zumindest das Belastungssignal seiner eigenen Belastungs-Bestimmungseinrichtung auswerten zu können, ggf. aber auch die Belastungssignale anderer Stellantriebe auswerten zu können. Vorteilhafterweise sind die genannten Auswerteeinrichtungen dabei derart konfiguriert, dass ein Belastungssignal bzw. ein daraus abgeleitetes Hilfesignal nur dann an andere Stellantriebe weitergeleitet bzw. gesendet wird, wenn die Auswertung des Belastungssignals tatsächlich das Erreichen einer Überlastung anzeigt. Hierdurch kann der Datenverkehr zwischen den Stellantrieben reduziert bzw. klein gehalten werden. Insbesondere können die Auswerteeinrichtungen derart konfiguriert sein, dass sie das Belastungssignal der eigenen Belastungs-Bestimmungseinrichtung kontinuierlich oder zyklisch auswerten und bei Erreichen eines kritischen Belastungszustands in ein Hilfssignal umwandeln, das dann an zumindest einen der anderen Stellantriebe gesandt wird. Grundsätzlich könnte aber auch mit nur einer Auswerteeinrichtung gearbeitet werden, die dann die Belastungssignale aller Stellantriebe auswertet.

Zusätzlich zur direkten Kommunikation der Stellantriebe untereinander können die Belastungssignale der Belastungs-Bestimmungseinrichtungen vorteilhafterweise auch an die übergeordnete, zentrale Steuereinrichtung übermittelt werden, wobei die genannte zentrale, übergeordnete Steuereinrichtung vorteilhafterweise dazu ausgebildet ist, die Vorgabe der Solldrehmomente an die einzelnen Stellantriebe in Abhängigkeit der empfangenen Belastungssignale anzupassen.

Die genannte Meldung an die übergeordnete Steuerung erfolgt vorteilhafterweise erst dann, wenn die Bereitstellung der Hilfsmomente bzw. die entsprechende Regelung zur Vermeidung von Überlastungen einzelner Stellantriebe, die sozusagen intern zwischen den Stellantrieben direkt bereitgestellt wurde, bereits erfolgt ist.

Die Steuerbausteine der intelligenten Stellantriebe werden also dazu genutzt, eine intelligente Überlastsicherung zu bilden, mittels derer Überlastungen einzelner Stellantriebe und daraus möglicherweise resultierende Beschädigungen oder gar Zerstörungen vermieden werden können. Gemäß einem Aspekt der vorliegenden Erfindung ist also eine Überlastschutzvorrichtung vorgesehen sein, die die Belastungszustände der einzelnen Stellantriebe überwacht und die Antriebsmomente variabel auf die mehreren Stellantriebe verteilt, so dass bei drohender Überlastung das Antriebsmoment an einem Stellantrieb steuerungstechnisch gedeckelt oder reduziert wird und zumindest ein weiterer Stellantrieb steuerungstechnisch unterstützend eingreift, um das insgesamt gewünschte Antriebsmoment soweit möglich dennoch bereitzustellen.

Wird festgestellt, dass die Kraft bzw. das Drehmoment oder die Last an einem Antrieb bzw. an mehreren Antrieben zu groß wird bzw. zu groß zu werden droht, reagieren die Steuerbausteine der weiteren Antriebe derart, dass die weiteren Antriebe eine stärkere Unterstützungswirkung haben und sich so verhalten, dass alle Stellantriebe innerhalb ihrer erlaubten Bereiche betrieben werden.

Vorteilhafterweise kann die genannte Überlastungsvorrichtung derart ausgebildet sein, dass die an sich vorgesehene Verteilung der Antriebsmomente möglichst - so gut es geht - eingehalten wird und die aus Überlastungsschutzgründen vorgesehene, besondere Verteilung der Antriebsmomente sich darauf beschränkt, die Unterstützung durch die anderen Stellantriebe so klein wie möglich zu halten, um den jeweiligen Stellantrieb, dem die Überlastung droht, gerade nicht in die Überlastung oder zumindest nicht in eine kritische Überlastung kommen zu lassen. Das unterstützend bereitgestellte Antriebsmoment - sei es die Erhöhung eines unterstützend wirkenden Antriebsmoments oder die Verringerung eines entgegenwirkenden, verspannenden Antriebsmoments - wird von der Steuereinrichtung also sparsam eingesetzt und insbesondere nur in der Höhe vorgesehen, die notwendig ist, um den anderen Stellantrieb vor Überlastung zu schützen. Hierdurch kann die zuvor erläuterte, gewünschte Betriebscharakteristik der Verstell- und/oder Antriebseinrichtung, insbesondere die erläuterte Verspannung, weitgehend erhalten bleiben. Allerdings kann dieses gewünschte Normalverhalten - insbesondere die genannte Verspannung - der gesamten Verstell- und/oder Antriebseinheit von der Überwachungsvorrichtung überschrieben werden, soweit notwendig.

Greift die Überlastschutzvorrichtung in der genannten Weise ein, kann dies in vorteilhafter Weiterbildung der Erfindung einer übergeordneten Steuerung gemeldet werden, beispielsweise um dies über eine Fernüberwachung jederzeit nachvollziehen zu können. Die genannte Überlastschutzvorrichtung kann hierzu eine Überlastschutz-Meldung absetzen bzw. an ein Interface bereitstellen, von dem es dann von der übergeordneten Steuerung und/oder Fernüberwachungseinrichtung abgerufen werden kann.

Die genannten Belastungs-Bestimmungseinrichtungen, die die jeweils auf die einzelnen Stellantriebe wirkenden Lasten individuell bestimmen, können grundsätzlich in verschiedener Weise ausgebildet sein. In Weiterbildung der Erfindung können die genannten Belastungsbestimmungseinrichtungen jeweils ein Sensorelement aufweisen, mittels dessen beispielsweise eine auf die Abtriebswelle der Stellantriebe wirkende Last gemessen werden kann. Ein solches Sensorelement kann insbesondere ein Kraft- und/oder Momenten- und/oder Dehnungs- und/oder Torsionsmesselement umfassen, das der genannten Abtriebswelle der Stellantriebe zugeordnet sein kann. Grundsätzlich können die zuvor erläuterten Sensorelemente und/oder Lasterfasser Verwendung finden, mittels derer auch die Momentenverteilung zum Zwecke der Verspannung gesteuert werden kann, so dass insoweit auf die vorhergehende Beschreibung verwiesen wird.

Je nach benötigter Unterstützung und/oder je nach aktuellem Betriebszustand der Momentenverteilung kann die Überlastschutzvorrichtung verschiedene Maßnahmen zur Unterstützung ergreifen. Beispielsweise kann die Anzahl der in gewünschter Drehrichtung arbeitender Stellantriebe und/oder die Anzahl der in entgegengesetzter, verspannender Stellrichtung arbeitender Stellantriebe verändert werden, um einen in Überlastung kommenden Stellantrieb zu unterstützen. Arbeiten beispielsweise vier Stellantriebe in gewünschter Drehrichtung und zwei Stellantriebe in entgegengesetzter, verspannender Stellrichtung, kann beispielsweise einer oder beide der in entgegengesetzter, verspannender Drehrichtung arbeitender Stellantriebe ausgeschaltet bzw. in den Leerlauf geschaltet werden, wenn einer oder mehrere der in gewünschter Drehrichtung arbeitenden Stellantriebe in die Überlastung zu kommen droht. Gegebenenfalls kann einer oder beide der entgegengesetzt arbeitenden, verspannenden Stellantriebe auch umgeschaltet werden, um nicht mehr entgegengesetzt, verspannend zu wirken, sondern ebenfalls in gewünschter Drehrichtung zu arbeiten.

Alternativ oder zusätzlich zu einer solchen Veränderung der Anzahl der in die jeweilige Richtung arbeitenden Stellantriebe kann auch innerhalb einer in dieselbe Richtung arbeitenden Stellantriebsgruppe die Antriebsmomentenverteilung verändert werden, um einen in Überlastung kommenden Stellantrieb zu schützen bzw. zu entlasten. Arbeiten beispielsweise in der vorgenannten Weise drei Stellantriebe in die gewünschte Drehrichtung und zwei weitere Stellantriebe in die entgegengesetzte, verspannende Drehrichtung, können beispielsweise einer oder zwei der in gewünschter Drehrichtung arbeitenden Stellantriebe so angesteuert werden, dass sie mehr Antriebsmoment bereitstellen, wenn der dritte der genannten, in gewünschter Drehrichtung arbeitenden Stellantriebe in die Überlastung zu kommen droht.

Vorteilhafterweise kann die Steuereinrichtung derart beschaffen sein, dass zunächst versucht wird, einen gewünschten Verspannungszustand beizubehalten, d.h. das Verhältnis der Antriebsmomente, die in gewünschter Drehrichtung und in entgegengesetzter Drehrichtung arbeiten, und/oder die Stärke der Verspannung, also die absolute Höhe der - jeweils in Summe betrachtet - entgegengesetzt arbeitenden Antriebsmomente, zunächst unverändert zu lassen bzw. in der zuvor erläuterten Weise in Abhängigkeit der äußeren Lasten zu steuern und, soweit es geht, Überlastungszustände einzelner Stellantriebe dadurch zu vermeiden, dass innerhalb der in dieselbe Richtung arbeitenden Stellantriebe die Antriebsmomente variabel verteilt werden, um Überlastungen einzelner Stellantriebe zu vermeiden, und das genannte Verhältnis der entgegengesetzt arbeitenden Antriebsmomente und/oder deren absolute Höhe erst dann zu verändern, wenn die vorgenannte erste Stufe, d.h. Veränderung der Antriebsmomentenverteilung innerhalb einer Gruppe nicht mehr ausreichend ist, um einen verlässlichen Überlastschutz zu erreichen.

Die Verteilung und Veränderung der Antriebsmomente an den einzelnen Stellantrieben, also einerseits eine Deckelung und/der Reduzierung des Antriebsmoments an dem Stellantrieb, der in die Überlastung zu kommen droht, und Erhöhung oder Erniedrigung des unterstützend wirkenden oder verspannend wirkenden Antriebsmoments an zumindest einem anderen Stellantrieb, kann steuerungstechnisch grundsätzlich in verschiedener Weise bewerkstelligt werden. Die Überlastvorrichtung kann hierzu inbesondere die zuvor bereits erläuterten Strategien einsetzen, also beispielsweise durch variables Verändern der Spreizung der Solldrehzahl und/oder Veränderung der Motorkennlinien der Stellantriebe und/oder individuelle Solldrehzahlvorgabe durch Drehzahlregler und/oder Veränderung der Motorkennlinien in Abhängigkeit der von einem übergeordneten Drehzahlregler vorgegebenen Solldrehzahl.

Die genannte Überlastschutzvorrichtung kann weitere Maßnahmen vorsehen, um bei Bedarf, wenn der steuerungstechnische Überlastschutz nicht mehr ausreichend ist, die negativen Folgen von Überlastungen zu verhindern. Insbesondere kann die Überlastschutzvorrichtung Überlastungsbremsen vorsehen bzw. aufweisen, die bei einzelnen oder allen Stellantrieben betätigt werden können, wenn die Belastungsbestimmungseinrichtung an einem oder mehreren Stellantrieben eine drohende Überlastung meldet. Insbesondere bei einem mechanischen Blockieren eines Stellantriebs kann durch Betätigen der Überlastbremsen eine weitere Beschädigung verhindert werden.

Alternativ oder zusätzlich zu einer solchen Überlastschutzbremse, die vorteilhafterweise in Abhängigkeit des Signals der Belastungsbestimmungseinrichtungen betätigt werden kann, ist es auch möglich, im Stellantrieb eine Sollbruchstelle vorzusehen, vorteilhafterweise im Bereich der Abtriebswelle, die das Abtriebsrad, welches mit den zu verdrehenden Bauteilen in Eingriff steht, mit einem Getriebe verbindet, über das der Motor die Abtriebswelle antreibt.

Vorteilhafterweise wird ferner vorgeschlagen, die Verspannung der Stellantriebe gegeneinander beim Verfahren der zu verstellenden Baugruppen an die äußeren Belastungen anzupassen, um die Stellantriebe nicht unnötig zu belasten, andererseits aber auch unter ungünstigen Bedingungen eine ausreichende Verspannung und damit Dämpfung der dynamischen Effekte zu erzielen. Dabei umfasst die Steuereinrichtung eine Verspannungs-Einstelleinrichtung zum variablen Einstellen der Stärke der Verspannung der Stellantriebe in Abhängigkeit einer variablen äußeren Last auf die zu verstellenden Baugruppen, die mittels einer Lastbestimmungseinrichtung bestimmbar ist. Wenn aufgrund der äußeren Lasten eine hohe Verspannung notwendig ist, sieht die Verspannungs-Einstelleinrichtung eine höhere bzw. ausreichend hohe Verspannung vor, während eine geringere Verspannung vorgesehen werden kann, wenn die Bedingungen dies zulassen, um die Stellantriebe nicht unnötig zu belasten. Durch eine solche intelligente Anpassung der Verspannung der Stellantriebe an die äußeren Lasten auf die zu verstellenden Baugruppen, insbesondere die zu verdrehende Gondel und den daran befestigten Rotor oder auf die Drehbühne eines Krans, können kleiner dimensionierte und/oder weniger Stellantriebe verwendet und vorzeitiger Verschleiß vermieden werden, während trotzdem eine Minimierung unerwünschter dynamischer Effekte auch unter ungünstigen Bedingungen sichergestellt wird. Der Wartungsaufwand reduziert sich hierbei.

Insbesondere kann die Verspannungs-Einstelleinrichtung derart ausgebildet sein, dass mit zunehmender äußerer Last und/oder mit zunehmenden Lastschwankungen die Verspannung der Stellantriebe erhöht wird, während mit abnehmenden äußeren Lasten und/oder bei nur kleineren oder ausbleibenden Schwankungen der äußeren Last eine kleinere Verspannung der Stellantriebe eingestellt werden kann.

Grundsätzlich kann hierbei eine stufenweise Verstellung der Verspannung ausreichend sein, insbesondere wenn eine ausreichende Anzahl von Stufen, beispielsweise drei oder mehr Stufen, insbesondere auch fünf oder mehr Stufen vorgesehen werden, wobei jedoch auch nur zwei Stufen ausreichend sein können. Dies kann die Ansteuerung der Stellantriebe vereinfachen und übermäßige Rechenoperationen der Steuer- bzw. Regeleinrichtung vermeiden. Alternativ kann jedoch auch eine stufenlose Verstellung der Verspannung vorgesehen werden, um eine möglichst feine Anpassung der Verspannung an die äußeren Randbedingungen zu erzielen.

Die äußeren Lasten können grundsätzlich in verschiedener Art und Weise bestimmt bzw. berücksichtigt werden, wobei die Lastbestimmung direkt oder indirekt erfolgen kann.

In vorteilhafter Weiterbildung der Erfindung kann eine Winderfassungseinrichtung vorgesehen sein, die die Windstärke und/oder Windrichtung und/oder die Gleichmäßigkeit des Windfelds erfasst, so dass die Verspannung in Abhängigkeit der erfassten Windstärke und/oder der Windrichtung und/oder Windstärke- und/oder -richtungsschwankungen variabel angepasst werden kann. Insbesondere kann die Verspannungs-Einstelleinrichtung dazu ausgebildet sein, mit zunehmender Windstärke und/oder mit zunehmender Ungleichmäßigkeit des Windfelds durch Böen und/oder Winddreher die Verspannung der Stellantriebe zu erhöhen. Beispielsweise kann vorgesehen sein, dass bei geringeren Windstärken bis zu einem gewissen Grenzwert, beispielsweise weniger als 10 m/Sek. oder weniger als 5 m/Sek. eine geringere Verspannung von beispielsweise im Bereich von 20 Nm vorgesehen wird, während bei höheren Windstärken oberhalb einer vorbestimmten Windgrenze von beispielsweise mehr als 10 m/Sek. eine höhere Vorspannung vorgesehen wird, beispielsweise im Bereich von 30 Nm oder mehr. Anstelle einer bereichsweisen Einstellung mit Windstärkegrenzen kann auch hier eine mehrstufige Verstellung oder eine stufenlose Verstellung vorgesehen werden, ggf. unter Verwendung eines Dämpfungsglieds, um nicht bei jeder kleinsten Windstärkeveränderung eine Anpassung der Ansteuerung vornehmen zu müssen.

Alternativ oder zusätzlich zur Berücksichtigung der Windstärke kann auch die Windrichtung und/oder die Ungleichmäßigkeit des Windfelds Berücksichtigung finden, beispielsweise dergestalt, dass bei hin- und herpendelnden Windrichtungen und/oder stärkeren Schwankungen im Windfeld, die abwechselnd unterschiedliche Stellantriebe mehr belasten, eine symmetrische Verspannung eingestellt wird, bei der gleich viele Stellantriebe mit einem Drehmoment in Soll-Drehrichtung wie Stellantriebe mit einem Drehmoment entgegen der Soll-Drehrichtung betrieben werden. Pendelt also der Wind hin und her oder ist allgemein das Windfeld ungleichmäßig, so dass sich insgesamt eine stärker schwankende Belastung einmal der einen Stellantriebsgruppe und einmal der anderen Stellantriebsgruppe ergibt, kann die Verspannungs-Einstelleinrichtung vorsehen, dass beispielsweise zwei gegen zwei Stellantriebe oder drei gegen drei Stellantriebe verspannt werden, d.h. zwei Stellantriebe treiben die Verstellbewegung voran, während zwei weitere Stellantriebe die Verstellbewegung bremsen oder - bei der genannten Drei-gegendrei-Einstellung - drei Stellantriebe treiben die Verstellbewegung voran, während ihr drei Stellantriebe entgegenwirken. Entsprechend können auch im Stillstand der Verdreheinheit die Stellantriebe verspannt werden, beispielsweise zwei gegen zwei oder drei gegen drei oder in anderen Konstellationen.

Führt andererseits die Windrichtung dazu, dass die Stellantriebe einseitig bzw. asymmetrisch belastet werden, kann die Verspannungs-Einstelleinrichtung eine asymmetrische Verspannung vorsehen, bei der mehr Stellantriebe die Verstellbewegung vorantreiben als Stellantriebe die Verstellbewegung bremsen oder umgekehrt weniger Stellantriebe die Verstellung vorantreiben als Stellantriebe diese Verstellbewegung bremsen, je nachdem, in welcher Richtung die äußere Last die mehreren Stellantriebe asymmetrisch belastet. Auch eine solche asymmetrische Verspannung kann entsprechend im Stillstand vorgesehen werden.

Eine solche symmetrische oder asymmetrische Verspannung der Stellantriebe mit einer gleichen oder unterschiedlichen Anzahl der in entgegengesetzte Richtungen arbeitenden Stellantrieben kann hierbei alternativ oder zusätzlich zur Berücksichtigung der Windverhältnisse auch aufgrund anderer Parameter bzw. Indikatoren der Belastung von der Verspannungs-Einstelleinrichtung eingestellt werden. Beispielsweise kann die Verspannungs-Einstelleinrichtung die tatsächlich auftretende Belastung der Stellantriebe auswerten, bspw. durch Auswerten deren Stromaufnahme, um zu bestimmen, ob eine insgesamt symmetrische Belastung oder eine asymmetrische Belastung vorliegt, woraufhin dann in der genannten Weise eine symmetrische oder asymmetrische Verspannung eingestellt werden kann.

Insbesondere kann die Lastbestimmungseinrichtung - alternativ oder zusätzlich zu einer direkten Wind- und/oder Windfelderfassung - den an den Stellantrieben auftretenden Lastverlauf und/oder Drehmomentverlauf bestimmen, um in Abhängigkeit hiervon die Höhe und Verteilung der Verspannung der Stellantriebe zueinander variabel einzustellen. Vorteilhafterweise kann die Lastbestimmungseinrichtung einen Lastamplitudenbestimmer zum Bestimmen der an zumindest einem Stellantrieb auftretenden Lastamplituden aufweisen, wobei die Verspannungs-Einstelleinrichtung dazu ausgebildet sein kann, mit zunehmend größeren Lastamplituden eine zunehmend größere Verspannung vorzusehen. Dieser Ansatz geht von der Überlegung aus, dass bei stärker schwankenden Windlasten und/oder zunehmend ungleichmäßigerem Windfeld die an den Stellantrieben induzierten Lasten stärker schwanken und/oder die induzierten Lastamplituden zunehmend größer werden.

Vorteilhafterweise kann der genannte Lastamplitudenbestimmer dazu vorgesehen sein, aus einem ungefilterten Lastsignal die Lastamplituden zu bestimmen, beispielsweise Maximal- und Minimalwerte über einen vorbestimmten, vorzugsweise kurzen Zeitbereich von beispielsweise einigen wenigen Sekunden zu bestimmen und aus den genannten, in einem bestimmten Zeitintervall auftretenden Maximal- und Minimalwerten die Lastamplitude zu bestimmen.

Das von der Lastbestimmungseinrichtung herangezogene Lastsignal zur Bestimmung der Lasten an den Stellantrieben kann grundsätzlich in verschiedener Art und Weise gewonnen werden. Beispielsweise kann mittels einer Drehmomentmesseinrichtung das am Stellantrieb und/oder einem zugeordneten Getriebe und/oder an einem Antriebsstrangelement auftretende Drehmoment gemessen werden, wobei die ungefilterten Amplituden des Drehmomentsignals ausgewertet werden können. Alternativ oder zusätzlich können mittels einer Dehnungsmesseinrichtung, beispielsweise einem Dehnungsmessstreifen, an einem Bauteil des Stellantriebs und/oder des Antriebsstrangs auftretende Dehnungen bzw. Verformungen bestimmt werden, um aus dem Dehnungssignal in der genannten Weise die Amplituden zu bestimmen. Wiederum alternativ oder zusätzlich kann auch mittels eines Kraftsensors bzw. einer Kraftmesseinrichtung eine Reaktionskraft beispielsweise einem Lagerelement des Stellantriebs oder einem Antriebsstrangelement gemessen werden, um hieraus die Lastamplituden zu bestimmen, die von schwankenden Windlasten induziert werden.

Alternativ oder zusätzlich können die Belastungen der Stellantriebe und/oder die auf die Stellantriebe wirkenden Lasten auch durch Sensorelemente gemessen werden, die einer Abtriebswelle der Stellantriebe zugeordnet sind, wobei das Sensorelement je nach Ausbildung unmittelbar an der Abtriebswelle angebracht oder mit einem Bauelement verbunden sein kann, das mit der genannten Abtriebswelle verbunden ist oder diese abstützt. Beispielsweise kann ein Torsionsmesser an der Abtriebswelle angebracht sein, der eine Torsion der Abtriebswelle misst. Alternativ oder zusätzlich kann ein Dehnungsmessstreifen eine Verformung der Abtriebswelle oder eines damit verbundenen Bauteils erfassen. Alternativ oder zusätzlich können Kraft- und/oder Drehmomentmesser an der Abtriebswelle oder damit verbundenen Bauteilen wie Wellen- oder Lagerflansche herrschenden Kräfte und/oder Drehmomente erfassen.

Die genannte Abtriebswelle des jeweiligen Stellantriebs, der das Sensorelement zugeordnet ist, kann sich vorteilhafterweise zwischen dem Antriebsrad, insbesondere Ritzel, das mit einem der zu verdrehenden Bauteile in Eingriff steht, und einem Getriebe erstrecken, über das die Abtriebswelle von einem Antrieb wie beispielsweise einem Elektro- oder Hydraulikmotor angetrieben wird. Die Anordnung des Sensorelements an der genannten Abtriebswelle kann eine genaue Bestimmung der tatsächlichen Belastung bereitstellen, insbesondere an den gefährdeten Bauteilen des Systems. Insbesondere können hierdurch sehr exakt die Zahnflankenbelastungen abgeschätzt werden, die an einem Drehkranz infolge der gemessenen Lasten an der Abtriebswelle auftreten.

Vorteilhafterweise ist die Lastbestimmungseinrichtung derart ausgebildet, dass die an jedem Stellantrieb individuell auftretenden Lasten einzeln bzw. individuell bestimmt werden können.

Alternativ oder zusätzlich zur Messung solcher mechanischer Größen kann das Lastmoment und/oder die Antriebslasten auch aus elektrischen Größen der Stellantriebe bestimmt werden. Beispielsweise können die Lastamplituden aus Stromaufnahme- und/oder Spannungsschwankungen und/oder aus am Frequenzumrichter auftretenden Größen berechnet bzw. bestimmt werden.

Um asymmetrische Lasten auf die Verstell- und/oder Antriebseinheit bzw. die Stärke der Asymmetrie der auf die Verstell- und/oder Antriebseinheit wirkenden Lasten zu bestimmen, kann die Lastbestimmungseinrichtung auch dazu ausgebildet sein, ein mittleres Drehmoment der Stellantriebe zu bestimmen, wobei als mittleres Drehmoment der Mittelwert bzw. der über ein Zeitfenster gemittelte Wert der von den Stellantrieben bereitgestellten Drehmomente angesehen werden kann. Wird beispielsweise festgestellt, dass die Stellantriebe insgesamt betrachtet ein in eine bestimmte Drehrichtung drehendes Drehmoment bestimmter Größe bereitstellen müssen, um einen vorbestimmten Drehwinkel anzufahren oder zu halten, kann davon ausgegangen werden, dass eine asymmetrische Windlast auf die Windkraftanlage bzw. eine asymmetrische Last auf die zu verstellende Baugruppe wirkt. In Abhängigkeit der Größe und/oder Zeitdauer des bestimmten, mittleren Drehmoments kann die Verspannungs-Einstelleinrichtung die Verspannung variabel einstellen, beispielsweise dergestalt, dass die Anzahl der in die eine Richtung drehenden Stellantriebe erhöht und/oder die Anzahl der in die entgegengesetzte andere Drehrichtung drehenden Stellantriebe erniedrigt wird. Wird beispielsweise ein ständig oder über einen längeren Zeitraum erhöht nach links ziehendes Drehmoment - oder bei schwankenden Lasten ein Drehmoment, das vorrangig nach links zieht - gemessen, kann die Anzahl der nach rechts drehenden Stellantriebe erhöht und/oder die Anzahl der nach links drehenden Stellantriebe erniedrigt werden. Alternativ oder zusätzlich kann die Verspreizung auch in die eine oder andere Drehrichtung verschoben werden, indem beispielsweise das Drehmoment der in die eine Richtung drehenden Stellantriebe erhöht und/oder das Drehmoment der in die andere Richtung drehenden Stellantriebe erniedrigt wird.

Die genannte Bestimmung von asymmetrischen Lasten auf die Verstell- und/oder Antriebseinheit, beispielsweise durch die vorgenannte Bestimmung des mittleren Drehmoments der Stellantriebe, kann auch dazu genutzt werden, die Windrichtung zu bestimmen, was genauer als eine direkte Messung der Windrichtung durch einen Windmesser sein kann und dazu verwendet werden kann, die Gondel bzw. den Rotor der Windkraftanlage exakt in den Wind zu fahren. Beispielsweise kann die Steuervorrichtung den anzufahrenden Stellwinkel so lange nachjustieren, bis keine asymmetrischen Lasten mehr festgestellt werden bzw. die Asymmetrie der äußeren Lasten minimal wird.

Um die äußeren Lasten und/oder die an den Stellantrieben induzierten Drehmomente bzw. Belastungen auch im Stillstand präzise bestimmen zu können, kann grundsätzlich in unterschiedlicher Weise vorgegangen werden. Beispielsweise kann, während der entsprechende Stellantrieb in Betrieb ist, das Drehmoment mittels der Frequenzumrichter berechnet werden. Alternativ oder zusätzlich kann dann, wenn der Motor abgeschaltet ist und eine Stillstandsbremse geschlossen ist, das Moment über die zuvor schon erwähnte Drehmomentmesseinrichtung und/oder Lastmesseinrichtung, beispielsweise in Form eines Messflansches und/oder Dehnungsmessstreifens an einem stillstehenden Strukturteil des Antriebs und/oder der Bremse gemessen werden, beispielsweise über einen Dehnungsmessstreifen am Motor oder Bremsgehäuse.

Alternativ oder zusätzlich zu einer solchen Drehmomentbestimmung durch einen Messflansch oder Dehnungsmessstreifen kann das Drehmoment auch durch Überwachung des Drehwinkels an einem Antriebsrad bzw. einem Element des Antriebsstrangs, insbesondere des Abtriebsritzels eines Stellantriebs, bestimmt werden. Soweit die Steifigkeit der Stellantriebe bekannt ist, kann bei stillstehendem Stellantrieb, genauer gesagt stillstehendem Motor und/oder stillstehender Bremse aus einer Winkeländerung an dem Antriebsrad, insbesondere Abtriebsritzel, die Änderung des Drehmoments berechnet werden. Eine bestimmte Drehmomentänderung geht nämlich mit einer bestimmten Winkeländerung einher.

Um die absolute Höhe des Drehmoments bestimmen zu können, kann das Antriebsmoment des Stellantriebs vor der Abschaltung als Basis dienen, um über die Drehwinkelmessung die Veränderung gegenüber dieser Basis und damit stets den absoluten Wert des Drehmoments bestimmen zu können.

Alternativ oder zusätzlich zur Einstellung der Verspannung kann das im Stillstand bestimmte Lastmoment auch dazu genutzt werden, den Umschaltvorgang zwischen Bremse und Motor, also von gebremstem Stillstand zu einer Stellbewegung, oder umgekehrt von Motorbetrieb zu gebremstem Stillstandsbetrieb, möglichst sanft zu gestalten. Beispielsweise kann das in der vorgenannten Weise bestimmte Lastmoment beobachtet werden, so dass zu einem Zeitpunkt sehr geringer Last umgeschaltet werden kann, um das Getriebe nicht zu überlasten, selbst wenn Motor und Bremse für kurze Zeit gemeinsam den Rotor halten. Alternativ oder zusätzlich kann die Summe aus Brems- und Motormoment überwacht und durch die Stellantriebssteuerung begrenzt werden.

Alternativ oder zusätzlich kann die Verspannungs-Einstelleinrichtung für die Einstellung der Verspannung einen Anstell- oder Pitchwinkel zumindest eines Rotorblatts berücksichtigen. Hierzu kann eine Pitchwinkel- bzw. BlattwinkelErfassungseinrichtung vorgesehen sein, in Abhängigkeit von deren Signal die Verspannungs-Einstelleinrichtung die Verspannung der Stellantriebe variieren kann. Beispielsweise kann die Verspannungs-Einstelleinrichtung vorsehen, dass bei Pitchwinkeln, die üblicherweise bei höheren Windstärken und/oder höheren Anlagenleistungen eingestellt werden, eine höhere Verspannung eingestellt wird als bei Pitchwinkeln, die bei niedrigeren Windstärken und/oder niedrigeren Anlagenleistungen eingestellt werden. Dies kann von der Überlegung ausgehen, das bei entsprechenden Pitchwinkeln entsprechend höhere bzw. niedrigere dynamische Belastungen auf die Gondel wirken, die eine entsprechend höhere oder niedrigere Verspannung erfordern bzw. ausreichen lassen. Vorteilhafterweise kann die Verspannungs-Einstelleinrichtung direkt mit der Pitchwinkelaktuatorik kommunizieren, um den Pitchwinkel bei der Verspannung der Stellantriebe gegeneinander zu berücksichtigen.

Alternativ oder zusätzlich kann auch eine Anlagenleistung, die die Windkraftanlage bereitstellt, für die Einstellung der Verspannung der Stellantriebe berücksichtigt werden. Beispielsweise kann bei höheren Anlagenleistungen eine stärkere Verspannung und bei niedrigeren Anlagenleistungen eine niedrigere Verspannung eingestellt werden. Ein solcher Ansatz geht von der Überlegung aus, dass bei höheren Anlagenleistungen grundsätzlich stärkere dynamische Kräfte an der Gondel zerren und somit eine stärkere Verspannung der Stellantriebe beim Verfahren der Gondel in einen anderen Azimutwinkel notwendig sind, um eine sichere Unterdrückung der unerwünschten dynamischen Effekte zu erzielen.

Die Einstellung der Verspannung kann von der Verspannungs-Einstelleinrichtung grundsätzlich in verschiedener Art und Weise bewerkstelligt werden. Insbesondere kann die Verspannungs-Einstelleinrichtung in vorteilhafter Weise dazu vorgesehen sein, die Anzahl der Stellantriebe, die mit einem Drehmoment in eine erste Drehrichtung arbeiten und/oder die Anzahl der Stellantriebe, die mit einem Drehmoment in die entgegengesetzte Drehrichtung betrieben werden, zu verändern, um hierdurch die Verspannung in der gewünschten Weise einzustellen, insbesondere die Stärke der Verspannung zu variieren.

Alternativ oder zusätzlich kann die Verspannungs-Einstelleinrichtung die Verspannung der Stellantriebe durch ein variables Verändern der Spreizung der den Stellantrieben vorgegebenen Soll-Drehzahlen einstellen. Hierzu kann die Soll-Drehzahl zumindest eines Stellantriebs gegenüber der an sich auszuführenden Soll-Drehzahl, mit der dann die Baugruppe entsprechend verstellt wird, abzusenken und/oder die Soll-Drehzahl zumindest eines Stellantriebs hier gegenüber anzuheben.

Je nach gewünschter Stärke der Verspannung kann hier mit unterschiedlich großen Soll-Drehzahlspreizungen gearbeitet werden, wobei beispielsweise eine Soll-Drehzahldifferenz zwischen einem bremsenden und einem antreibenden Stellantrieb im Bereich von 100-500 oder 200-500 Umdrehungen pro Minute ausreichen und vorteilhaft sein kann, aber auch höhere Drehzahldifferenzen von mehr als 500 Umdrehungen pro Minute, insbesondere auch 1000 bis 5000 Umdrehungen pro Minute vorgesehen werden können. Beispielsweise kann mit einer um etwa 3000 Umdrehungen erhöhten oder erniedrigten Soll-Drehzahl für viele auftretende Verfahrbewegungen eine vernünftige bzw. passende Verspannung erreicht werden. Andererseits kommen auch Drehzahldifferenzen von weniger als 100 Umdrehungen pro Minute in Betracht.

In vorteilhafter Weise kann die Verspannungs-Einstelleinrichtung dazu ausgebildet sein, die Motorkennlinien der Stellantriebe zu verändern, um die Verspannung sanfter oder schärfer einstellen bzw. anpassen zu können.

Insbesondere kann in vorteilhafter Weiterbildung der Erfindung vorgesehen sein, dass jedem der mehreren Stellantriebe ein motoreigener Drehzahlregler zugeordnet ist, der dem jeweils zugehörigen Stellantrieb ein Drehmoment vorgibt und die Ist-Drehzahl des zugehörigen Stellantriebs zurück erhält. Dabei kann ein übergeordneter Drehzahlregler vorgesehen sein, der den motoreigenen Drehzahlreglern jeweils eine Soll-Drehzahl vorgibt.

Dieser übergeordnete Drehzahlregler kann vorteilhafterweise mehrere Eingangsparameter berücksichtigen, insbesondere einen Soll-Drehwinkel, der die Soll-Verstellung der Baugruppe, beispielsweise den Soll-Azimutwinkel bzw. die Soll-Azimutwinkelverstellung der Windkraftanlagengondel vorgibt, und darüber hinaus vorteilhafterweise zusätzlich ein Windgeschwindigkeitssignal und/oder ein Drehmomentsignal, das das auf die Baugruppe einwirkende Drehmoment aufgrund der äußeren Lasten wiedergibt, beispielsweise das Windmoment, und/oder ein Lastamplitudensignal, das die Lastamplitude an den Stellantrieben wiedergibt, und/oder noch weitere Parameter wie zuvor erläutert, beispielsweise den Pitchwinkel. In Abhängigkeit der genannten Eingangsparameter gibt der übergeordnete Drehzahlregler dann jeweils Soll-Drehzahlen für die motoreigenen Drehzahlregler vor.

Die genannten motoreigenen Drehzahlregler können in Abhängigkeit der vorgegebenen Soll-Drehzahl und/oder der Differenz zu einer Ist-Drehzahl und/oder dem bereitzustellenden Soll-Drehmoment und/oder der Differenz zwischen Soll- und Ist-Moment die Motorkennlinie des jeweiligen Motors verändern, um den Motor beispielsweise weicher einzustellen und damit die Getriebe zu schonen bzw. haltbarer zu machen oder, soweit notwendig, den Motor härter einzustellen, um dynamischen Wirkungen im Antriebsstrang stärker entgegenzutreten. Gegebenenfalls können für die Verstellung der Motorkennlinie von den Drehzahlreglern auch andere Parameter berücksichtigt werden, in Abhängigkeit derer dann die Kennlinienverstellung erfolgt.

Der übergeordnete Drehzahlregler und/oder die motoreigenen Drehzahlregler können beispielsweise in Form eines P-Reglers ausgebildet sein. Vorteilhafterweise kann den motoreigenen P-Reglern ein Begrenzungsbaustein nachgeordnet werden, der hinsichtlich des an den Motor gegebenen Soll-Drehmoments eine Begrenzung vorsieht.

Ein solcher P-Drehzahlregler kann insbesondere dazu vorgesehen sein, die Kennlinien der Stellantriebe in ihrer Steigung zu beeinflussen. Um ein bestimmtes Verspannmoment zu erreichen, kann eine vom P-Anteil abhängige Drehzahldifferenz vorgegeben werden.

Angesichts der intelligenten Steuerung bzw. Regelung der Verspannung der Stellantriebe kann die Verstell- und/oder Antriebseinheit ohne Betriebsbremse auskommen bzw. Verstellvorgänge ohne Anziehen einer Betriebsbremse ausführen, obwohl eine solche Betriebsbremse gleichwohl vorgesehen sein kann.

Unabhängig vom Vorhandensein einer solchen Betriebsbremse kann die Verstell- und/oder Antriebseinheit eine Stillstands-Bremse bspw. in Form einer formschlüssig wirkenden Verriegelung bzw. Haltebremse aufweisen, die vorteilhafterweise bei längeren Stillstandszeiten, ggf. aber auch bei nur kürzeren Stillstandszeiten automatisiert betätigt werden kann. Beispielsweise kann eine solche Stillstandsbremse das vorgenannte Großwälz- und/oder -gleitlager blockieren, um die Stellantriebe und ggf. vorhandene Getriebe zu entlasten, und/oder einem Getriebe zwischen Stellantriebsmotor und Antriebsritzel bzw. -rad zugeordnet sein, um eine Getriebewelle festzuhalten. Alternativ oder zusätzlich kann die Stillstandsbremse ggf. auch an einem oder mehreren Stellantriebsmotoren angreifen.

Die genannten Stellantriebe können in vorteilhafter Weiterbildung der Erfindung jeweils einen Elektromotor aufweisen. Alternativ wäre es jedoch auch möglich, hydraulische Motoren vorzusehen. Hiervon unabhängig können die Stellantriebe eine oder mehrere Getriebestufen umfassen, um die Motordrehzahl in die gewünschte Ritzel- bzw. Antriebsraddrehzahl zu übersetzen oder zu untersetzen.

Um den ungewünschten Beweglichkeiten im Antriebsstrang und den sich hieraus ergebenden dynamischen Wirkungen zusätzlich entgegenzuwirken und die Regelung der Stellantriebs-Verspannung zu unterstützen sowie die Wartung und Reparatur zu vereinfachen, kann nach einem weiteren Aspekt der vorliegenden Erfindung vorgesehen sein, die zumindest zwei Stellantriebe, die hiervon zu einander verdrehbaren Baugruppen sowie die Steuereinrichtung einschließlich der ggf. vorgesehenen mehreren Drehzahlregler zu einem vormontierten Einbaumodul oder Montagebaugruppe zusammenzufassen, das nach Art eines Plug-and-Play-Moduls zwischen die beiden gegeneinander zu verdrehenden Anlagenteile montiert werden kann, insbesondere zwischen den Turm einer Windkraftanlage und deren Gondel bzw. einem die Gondel tragenden Turmstück. Vorteilhafterweise umfassen die in das Einbaumodul integrierten, zueinander verdrehbaren Baugruppen hierfür Anschlussmittel, mittels derer die genannten weiteren Anlagenkomponenten in einfacher Weise an das Einbaumodul angeschlossen werden können. Diese Anschlussmittel können insbesondere mechanische Befestigungsmittel umfassen, beispielsweise lösbare Bolzenverbindungen. Die Anschlussmittel können aber auch elektrische und/oder signaltechnische und/oder energieversorgungstechnische Anschlussmittel wie beispielsweise Stromleitungsanschlüsse, Signalleitungsanschlüsse und/oder hydraulische Anschlüsse umfassen, so dass das Einbaumodul in einfacher Weise an die anzuschließenden Anlagenkomponenten angeschlossen bzw. mit diesen verbunden werden kann.

Um die innere Torsionssteifigkeit der Stellantriebe zu erhöhen, kann in vorteilhafter Weiterbildung der Erfindung insbesondere eine zumindest näherungsweise symmetrische Aufnahme der Belastung am ausgangsseitigen Antriebsrad des Stellantriebs durch eine beidseitige Lagerung vorgesehen sein. Insbesondere kann eine Ausgangswelle des Stellantriebs, insbesondere des Getriebes des Stellantriebs, an dem das genannte Antriebsrad, insbesondere -ritzel, vorgesehen ist, auf beiden Seiten des Antriebsrads durch Lager radial abgestützt sein, wobei zusätzlich zur Radialabstützung ggf. auch eine Axialkomponente abgefangen werden kann.

Die beidseitig vorgesehenen Lager können hierbei in die jeweilige Stellantriebseinheit integriert sein, beispielsweise die das Abtriebsritzel tragende Welle beidseits des Antriebsritzels an einem Gehäuse der Antriebseinheit, insbesondere deren Getriebe, abstützen. Alternativ kann auch zumindest eines der Lager direkt an der Baugruppe abgestützt sein, an der die Stellantriebseinheit befestigt wird. Beispielsweise kann die Baugruppe hierbei einen Aufnahmetopf und/oder zwei voneinander beabstandete Lagerträger umfassen, in die die Stellantriebseinheit so eingesetzt werden kann, dass zumindest eines der Lager direkt an der Baugruppe abgestützt werden kann. Auch wenn beide Lager in die Stellantriebseinheit und deren Gehäuse integriert und daran abgestützt sind, kann die Baugruppe, an der die Stellantriebseinheit befestigt ist, einen solchen Lagertopf bzw. solchermaßen vorgesehene Lagerträger aufweisen, um die Stellantriebseinheit vorzugsweise im Bereich der beiden genannten Lager fest abzustützen. Hierdurch kann ein direkter Kraftfluss und eine direkte Einleitung der Lagerkräfte in die genannte Baugruppe erfolgen.

Die zuvor genannten, zueinander verdrehbaren Baugruppen können beispielsweise die Lagerringe eines Großwälz- und/oder -gleitlagers bilden oder umfassen oder daran befestigt sein, wobei die Stellantriebe vorteilhafterweise innerhalb des von den Lagerringen begrenzten Innenraums angeordnet sein können. Ein solches Großwälz- und/oder -gleitlager kann beispielsweise ein Azimut-Lager bilden, das einerseits Anschlussmittel zum Anschließen an einen oberen Endabschnitt eines Turms einer Windkraftanlage und/oder andererseits Anschlussmittel zum Anschließen der Windkraftanlagengondel und/oder eines die Gondel tragenden Turmstücks aufweisen kann.

Grundsätzlich kann die Verstell- und/oder Antriebseinheit jedoch auch für andere Verstellaufgaben eingesetzt werden, beispielsweise als Drehwerk oder Drehantrieb eines Krans oder eines Baggers, wenngleich die genannte Verwendung als Azimut-Verstellantrieb und/oder Pitchwinkel-Verstellantrieb einer Windkraftanlage besondere Vorteile mit sich bringt.

Durch das Zusammenfassen der genannten Komponenten der Verstell- und/oder Antriebseinheit zu einem vormontierbaren Einbaumodul kann nicht nur eine erhöhte Steifigkeit der Lagerung der anzubindenden Baugruppen erzielt werden, die die unerwünschten dynamischen Wirkungen reduziert, sondern es können auch diverse weitere Vorteile erzielt werden, beispielsweise kleinere Lagergrößen durch eine steife Anschlusskonstruktion am Lager. Einerseits kann die Montage der einzelnen Komponenten schon beim Anlagenhersteller erfolgen, wodurch sich ein beträchtlicher logistischer Vorteil ergibt. Zum anderen bleibt in der Windkraftanlagengondel bzw. im Maschinenhaus mehr Platz, da die Stellantriebe in das genannte Einbaumodul zwischen Turm und Maschinenhaus verlagert sind. Hierdurch können Rettungswege vergrößert und der Zugang zum Hauptantriebsstrang der Anlage erleichtert werden.

Zum anderen sind die in der vormontierten Einbaubaugruppe angebrachten Antriebe leichter zugänglich, wodurch Wartung, Reparatur und Austausch erleichtert wird. Insbesondere kann aber die Weichheit und Nachgiebigkeit der bislang üblichen Lagerung der Stellantriebe und des Azimutlagers, wie sie aktuelle Maschinenträger von konventionellen Windanlagen mit sich bringen, vermieden werden.

Die Erfindung wird nachfolgend anhand bevorzugter Ausführungsbeispiele und zugehöriger Zeichnungen näher erläutert. In den Zeichnungen zeigen:
- Fig. 1:: eine schematische perspektivische Darstellung einer Windkraftanlage, die eine Verstell- und/oder Antriebseinheit zum Verstellen des Azimutwinkels der Gondel umfasst, die in vorteilhafter Weiterbildung der Erfindung als Azimut-Einbaumodul ausgebildet ist,
- Fig. 2:: eine schematische Darstellung des Azimut-Einbaumoduls aus Fig. 1 in verschiedenen Einbaulagen,
- Fig. 3:: eine schematische Darstellung eines Azimutmoduls ähnlich Fig. 2 nach einer weiteren Ausbildung der Erfindung, gemäß der die Stellantriebe zueinander gegensinnig orientiert in das Modul integriert sind,

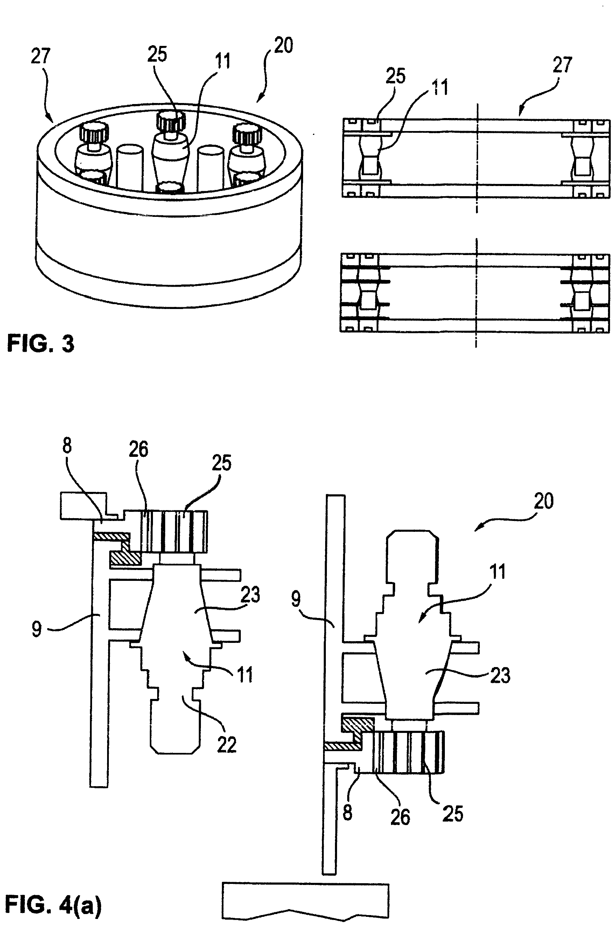

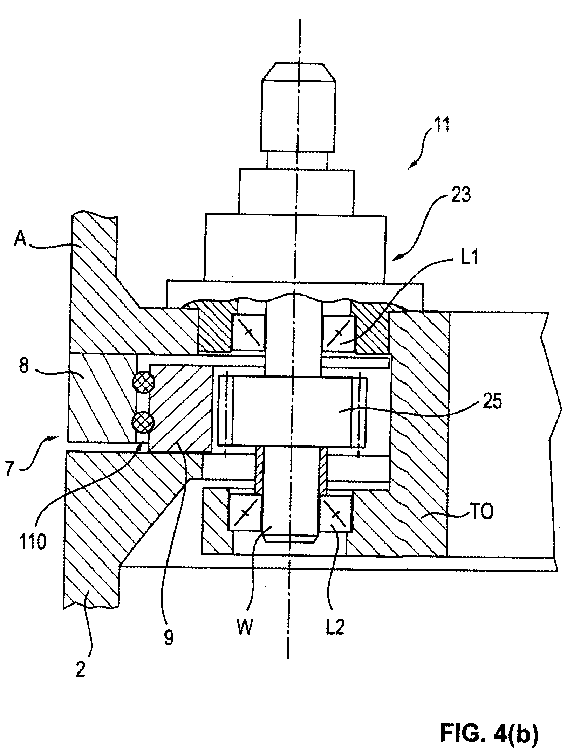

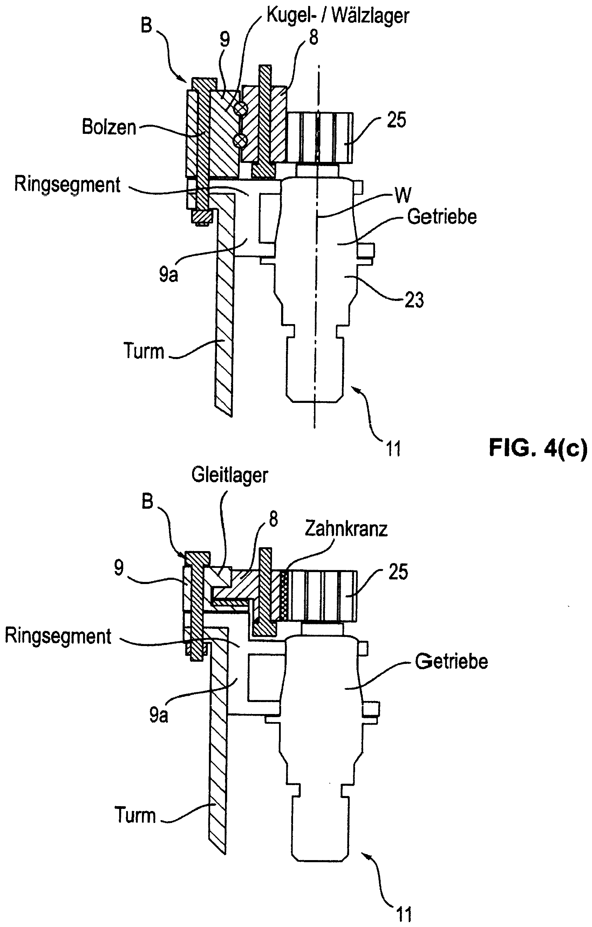

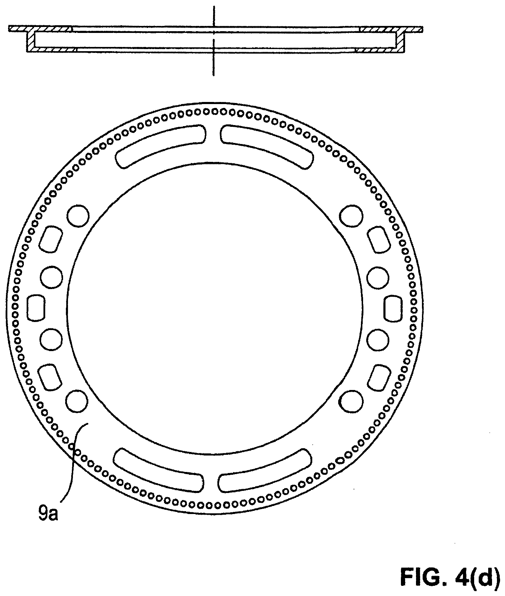

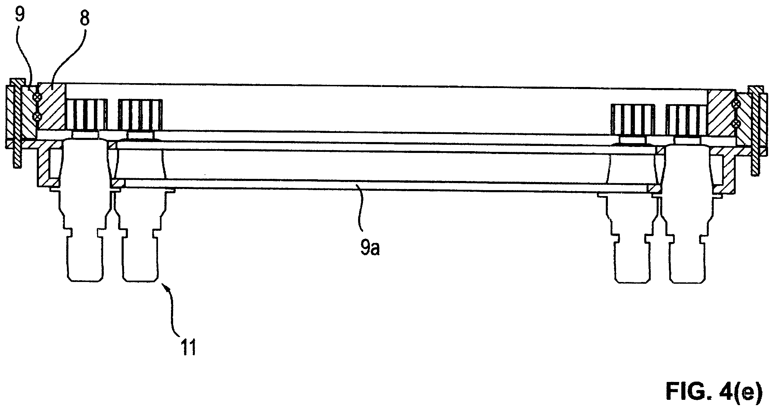

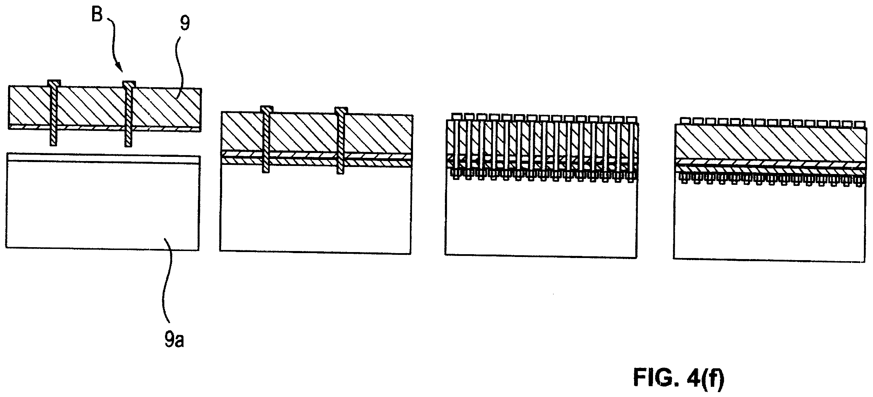

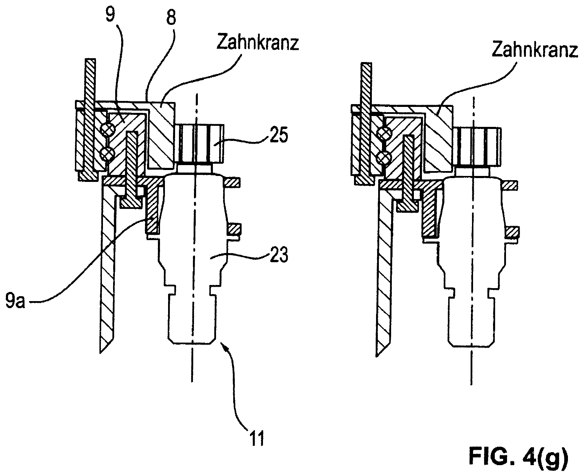

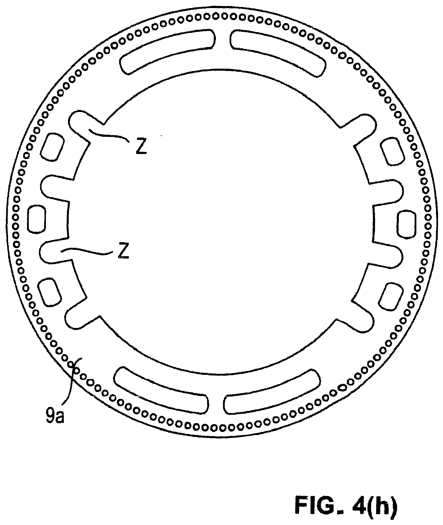

- Fig. 4:: eine schematische Darstellung eines Stellantriebs eines Azimutmoduls aus den vorhergehenden Figuren, wobei in der Teilansicht (a) die Gleitlagerung zwischen Zahnkranz und Gehäusering dargestellt und eine nur einseitige Abstützung des Antriebsritzels gezeigt ist, und wobei in der Teilansicht (b) eine symmetrische, zweiseitige Lagerung des Antriebsritzels einer Stellantriebseinheit, die an einem Azimutmodul befestigt ist, gezeigt ist, wobei die Teilansicht 4(c) zwei weitere vorteilhafte Einbauoptionen eines Stellantriebs mit Wälz- und Gleitlagern zeigt, die weitere Teilansicht 4(d) einen Lagerring für die Stellantriebe mit darin vorgesehenen Lagerausnehmungen und die Teilansicht 4(e) den genannten Lagerring im Querschnitt mit darin eingebauten Stellantrieben zeigt, ferner die Teilansicht 4(f) die Anordnung der Verbindungsbolzen in dem Lagerring zeigt, weiterhin die Teilansicht 4(g) eine weitere Einbauoption für die Stellantriebe und die Fixierung mittels Bolzen am äußeren Ring der Dreheinheit zeigt, und Fig.4(h) einen Lagerring ähnlich der Teilansicht 4(d) nach einer weiteren Ausführungsform zeigt, wonach der genannte Lagerring zu einer Seite hin offene, kerbenähnliche Lagerausnehmungen für die Stellantriebe aufweist, so dass die Stellantriebe quer zur Drehachse der Dreheinheit einschiebbar sind,
- Fig. 5:: eine schematische Darstellung eines Azimutmoduls mit insgesamt sechs Stellantrieben, wobei die Stellantriebe in verschiedenen Verspannungszuständen dargestellt sind, um die stufenweise Umschaltung der Verspannung zu verdeutlichen,
- Fig. 6:: ein Drehzahl-Drehmoment-Diagramm, in dem die Motorkennlinien unterschiedlich angesteuerter Stellantriebe und das sich hieraus ergebende Verspannmoment dargestellt sind,
- Fig. 7:: eine schematische Darstellung der Steuerungs- bzw. Regeleinrichtung zum Steuern bzw. Regeln der Stellantriebe der Verstell- und/oder Antriebseinheit aus den vorhergehenden Figuren,
- Fig. 8:: eine schematische, ausschnittsweise Schnittansicht einer Stellantriebseinheit, die eine Drehmomentmesseinrichtung zum Messen des induzierten Drehmoments auch im Stillstand aufweist, wobei in der Teilansicht (a) als Drehmomentmesseinrichtung ein Messflansch zwischen einer Bremse und dem Motor der Stellantriebseinheit vorgesehen ist und in der Teilansicht (b) ein entsprechender Messflansch zwischen dem Stator bzw. Motorgehäuse und einem Anschlussflansch vorgesehen ist, und in der Teilansicht (c) die Anordnung eines Lastsensors dargestellt ist,
- Fig. 9:: eine perspektivische, schematische Darstellung eines die äußeren Lasten der Verstell- und/oder Antriebseinheit der Windkraftanlage induzierenden Windfelds, wobei zusätzlich zu einer topografischen Darstellung des Windfelds eine diagrammartige Darstellung der zugehörigen Windgeschwindigkeitsänderungen in einem ortsfesten System und eine diagrammartige Darstellung der Windgeschwindigkeitsänderungen in einem mitdrehenden System der Rotorblätter der Windkraftanlage gezeigt sind, und

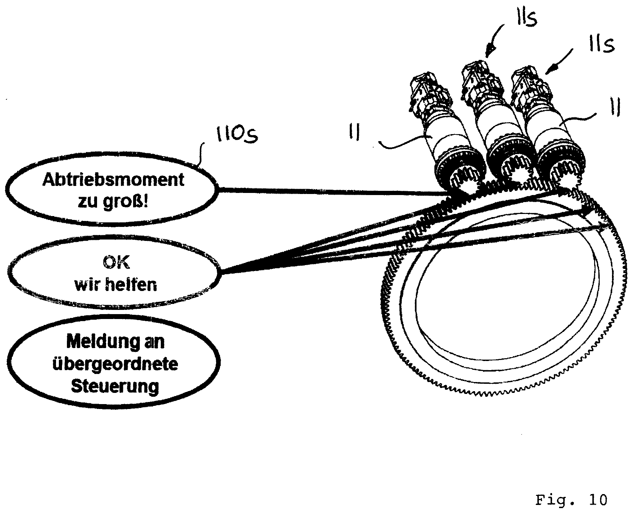

- Fig. 10:: eine perspektivische, schematische Darstellung der direkten Kommunikation der intelligenten Stellantriebe untereinander, um bei Überlastgefahr eines Stellantriebs direkt an den anderen Stellantrieben ein unterstützendes und entlastendes Drehmoment bereitzustellen.

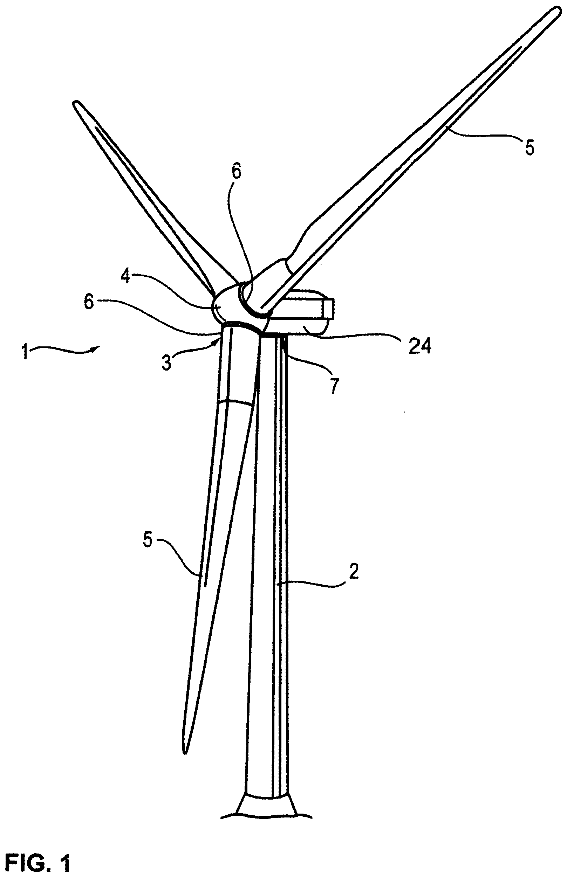

Wie Fig. 1 zeigt, kann der Rotor 3 einer Windkraftanlage 1 um eine liegende Rotorachse drehbar an einer Gondel 24 bzw. einem Maschinenhaus gelagert sein, das auf einem Turm 2 angeordnet und um eine aufrechte Achse verdreht werden kann, um den Rotor 3 zur Windrichtung ausrichten zu können. In der genannten Gondel 24 können in an sich bekannter Weise der Generator, Steuerungsaggregate hierfür und zusätzliche Energiewandler- und Hilfsaggregate untergebracht sein.

Die an der Gondel 24 um die liegende Rotorachse drehbar gelagerte Rotornabe 4 trägt mehrere Rotorblätter 5, die an der Rotornabe 4 um Rotorblatt-Längsachsen drehbar gelagert sind, so dass der Anstell- bzw. Pitchwinkel der Rotorblätter an die Betriebsbedingungen, insbesondere die Windstärke und den Einschaltstatus der Windkraftanlage angepasst werden kann. Hierzu können in an sich bekannter Weise Pitchverstell- und/oder Antriebseinheiten vorgesehen sein.

Um die Gondel 24 in die gewünschte Winkelstellung zu bringen, d.h. einen gewünschten Azimutwinkel anzufahren, ist zwischen dem Turm 2 und der Gondel 24 eine Verstell- und/oder Antriebseinheit 20 vorgesehen, die als Azimut-Einbaumodul ausgebildet und vormontiert ist und ein Azimutlager 7 beinhaltet, das die aufrechte Drehachse für die Gondel 24 gegenüber dem Turm 2 bereitstellt. Das genannte Azimutlager 7 kann hierbei als Großwälz- und/oder -gleitlager ausgebildet sein und zwei Lagerringe 8 und 9 umfassen, die gegeneinander verdrehbar gelagert sind, beispielsweise durch das in Fig. 4 (a) gezeigte Gleitlager 10 oder das in Fig. 4 (b) gezeigte Walzlager 110.

Die genannten Lagerringe 8 und 9, ggf. mit daran starr angebrachten Modulgehäuseringen, definieren einen - grob gesprochen - zylindrischen Innenraum, in dem mehrere Stellantriebe 11 zum Verdrehen der Lagerringe 8 und 9 gegeneinander aufgenommen sind, und besitzen geeignete Anschlussmittel, um am Turm 2 bzw. der Gondel 24 oder einem diese tragenden Turmstück befestigt zu werden.

Wie die Teilansicht (a) der Fig. 4 zeigt, können die Stellantriebe 11 beispielsweise an zwei voneinander beabstandeten Lagerträgern 21 befestigt sein, die beispielsweise plattenförmig ausgebildet sein können. Die Stellantriebe 11 können Elektromotoren 22 umfassen, die über ein Getriebe 23 ein Ritzel 25 antreiben, welches mit einem Zahnkranz 26 kämmt, der mit dem anderen der beiden Lagerringe starr verbunden ist, so dass ein Verdrehen des Ritzels 25 zu einem Verdrehen der beiden Lagerringe 8 und 9 gegeneinander führt.

Wie die Teilansicht (b) der Fig. 4 zeigt, kann das Abtriebsritzel 25 eines jeweiligen Stellantriebs 11 vorteilhafterweise auch beidseitig abgestützt bzw. gelagert, insbesondere zumindest näherungsweise symmetrisch gelagert sein. Hierbei kann ein auf der Getriebeseite vorgesehenes Lager L1 die das Ritzel 25 tragende Welle W im Gehäuse des Stellantriebs 11, insbesondere dessen Getriebegehäuse abstützen. Zusätzlich zu diesem getriebeseitigen Lager L1 kann die das Ritzel 25 tragende Welle W durch ein zweites Lager L2 abgestützt sein, das sich auf der dem Getriebe 23 abgewandten Seite des Ritzels 25 befindet. Dieses zusätzliche Lager L2 kann grundsätzlich ebenfalls in einem Abschnitt des Getriebegehäuses vorgesehen und daran abgestützt sein. Wie die Teilansicht (b) der Fig. 4 zeigt, kann das genannte Lager L2 jedoch auch in einem Abschnitt des Azimutmoduls A vorgesehen sein, um das Ritzel 25 bzw. die Welle W direkt am Azimutmodul abzustützen. Das Azimutmodul A kann hierzu einen Lagertopf T0 aufweisen, der sich in den Turm 2 hinein erstreckt und in den der Stellantrieb 11 mit der genannten Welle W eingesetzt werden kann. Alternativ kann die Montage- bzw. Verbindungsschnittstelle auch an anderer Stelle gesetzt sein. Beispielsweise kann die in Fig. 4 (b) gezeigte Abtriebswelle W eine über die Lager L1 und L2 in das Azimutmodul A integrierte Baugruppe bilden und mittels einer Steckverzahnung mit einem Ausgangselement des Stellantriebs 11, beispielsweise einem Planetenträger der letzten Getriebestufe, in Eingriff gebracht werden.

Vorteilhafterweise können sich die beiderseits des Ritzels 25 vorgesehenen Lager L1 und L2 direkt an Strukturträgerteilen des Azimutmoduls A abstützen, um einen direkten Kraftfluss zu bewirken.

In kinematischer Umkehrung zu der Ausführung gemäß Fig. 4 (b) wäre es auch möglich, den Stellantrieb 11 in analoger Weise nicht am Azimutmodul, sondern an dem Turmmodul, mit dem das Azimutmodul verbunden wird, zu befestigen.

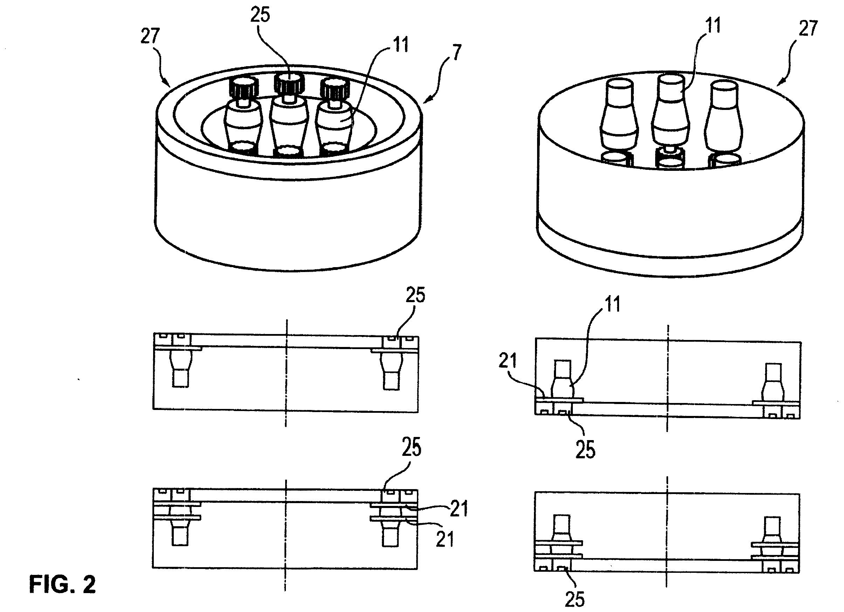

Weiterhin wäre es möglich, die in Fig. 4 (b) gezeigte Anordnung zu stürzen und den Stellantrieb 11 sozusagen kopfüber anzuordnen, wie dies in ähnlicher Weise Fig. 2 verdeutlicht.

Weitere Einbauoptionen mit hängender Stellantriebs-Anordnung zeigt die Teilansicht Fig. 4 (c), wonach die Stellantriebe mit einem oben liegenden Antriebsritzel eingebaut sind, so dass sich die Abtriebswelle W vom Ritzel 25 nach unten zu dem unter dem Ritzel 25 liegenden Getriebe 23 erstreckt. Der Elektromotor 22 kann wiederum unterhalb des Getriebes 23 liegen.
Der hängend angeordnete Stellantrieb 11 ist dabei wiederum an einem in der Teilansicht 4 (d) gezeigten Lagerring 9a gehalten, der beispielsweise am oberen Ende eines Turms befestigt und mit dem stehenden Lagerring 9 verbunden sein kann, wobei eine Bolzenverbindung B gleichzeitig die Lagerringe 9 und 9a miteinander und an dem Turm befestigen kann, vgl. Fig. 4 (c). Die beiden in Fig. 4 (c) gezeigten Varianten unterscheiden sich voneinander dadurch, dass der verdrehbare Lagerring 8, der von dem Ritzel 25 angetrieben wird, mittels Wälzlagern bzw. mittels Gleitlager an dem stehenden Lagerring 9 abgestützt ist.

Die Abstützung kann dabei gegenüber einem oder beiden Teilen 9 und 9a erfolgen, wie dies beispielsweise die rechte Seite und die dort dargestellte Gleitlageranordnung verdeutlicht.

Wie die Teilansicht 4 (d) verdeutlicht, kann der Lagerring 9a Ausnehmungen aufweisen, in denen die Stellantriebe 11 in Richtung der Längsachse der Stellantriebe eingeschoben bzw. eingesteckt werden können, insbesondere nach unten herausgenommen bzw. nach oben eingesteckt werden können. Zusätzlich kann der genannte Lagerring 9a eine Vielzahl von Bolzenausnehmungen aufweisen, um die Bolzen der Bolzenverbindung B einstecken zu können.

Die Schnittansicht der Teilansicht 4 (e) zeigt die in den Ausnehmungen des Lagerrings 9a sitzenden Stellantriebe 11 und die Bolzenverbindung B, wobei, wie die Teilansicht 4 (f) zeigt, der Lagerring 9a für die Stellantriebe 11 an dem Lagerring 9 vormontiert sein kann, beispielsweise durch Bolzen in jedem sechsten Bolzenloch, an dem Gewinde vorgesehen sein können, um die Vormontage zu ermöglichen. Bei der Montage am Turm können dann sämtliche Bolzen gesetzt und durch Muttern gesichert werden, wie dies die rechte Teilansicht der Fig. 4 (f) zeigt.

Gemäß der Teilansicht 4 (g) kann der zu verdrehende Lagerring 8 auch den Außenring bilden, während der feststehende Lagerring 9 innenliegend angeordnet sein kann.

Wie die Teilansicht 4 (h) zeigt, kann der Lagerring 9a auch zu einer Seite hin - insbesondere zur Innenseite hin - offene Ausnehmungen Z aufweisen, in die die Stellantriebe quer zu ihrer Längsachse eingeschoben werden können. Ist der Lagerring bzw. -topf 9a in einer horizontalen Ausrichtung verbaut, können die Stellantriebe 2 horizontal in die Ausnehmungen Z eingeschoben werden, wobei die Stellantriebe 2 ausreichend große - in der gezeichneten Ausführung ovale - Krägen umfassen können, die die schlitzförmigen bzw. kerbenartigen Ausnehmungen Z überdecken, vgl. Fig. 4 (h).

Wie Fig. 2 zeigt, können die Stellantriebe 2 grundsätzlich verschieden eingebaut sein bzw. kann das vormontierte Azimutmodul verschiedene Einbaulagen einnehmen, beispielsweise dergestalt, dass die Ritzel 25 oberhalb der Elektromotoren 22 zu liegen kommen und/oder an einem oberen Randabschnitt des Einbaumoduls 27 zu liegen kommen. Alternativ kann auch eine umgekehrte Einbausituation mit unten liegendem Antriebsritzel bzw. am unteren Endabschnitt des Einbaumoduls 27 liegenden Ritzeln vorgesehen sein, vgl. Fig. 2. Je nach Einbaulage des Einbaumoduls können die Stellantriebe 11 feststehend mit dem Turm 2 angeordnet sein, oder mitdrehend mit der Gondel 24 angeordnet werden.

Dabei können die Stellantriebe 11 an nur einem Halteträger bzw. Lagerträger 21 oder, wie in Fig. 4 gezeigt, an zwei voneinander beabstandeten Lagerträgern 21 befestigt sein.

Wie Fig. 3 zeigt, können auch zueinander gegensinnig angeordnete Stellantriebe vorgesehen sein, so dass eine Untergruppe der Stellantriebe 11 ein oben liegendes Ritzel bzw. das Ritzel 25 am oberen Endabschnitt des Einbaumoduls 27 und eine andere Gruppe der Stellantriebe ein unten liegendes Ritzel 25 hat.

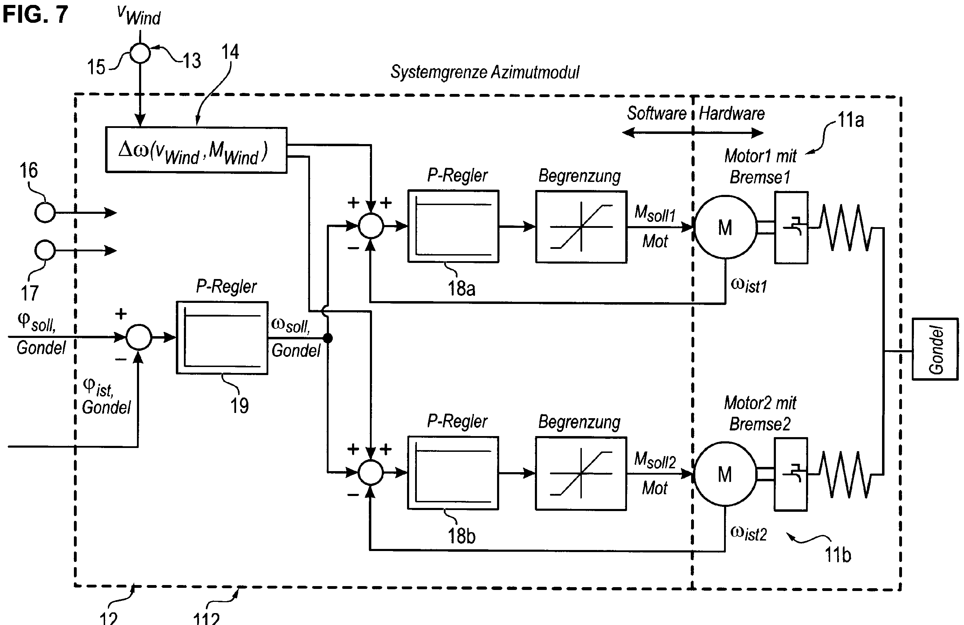

Wie Fig. 7 zeigt, in der beispielhaft nur zwei Stellantriebe 11 dargestellt sind, kann eine Steuereinrichtung 12, die ebenfalls in das Einbaumodul 27 integriert sein kann, mehrere motoreigene Drehzahlregler 18a und 18b aufweisen, so dass jedem Stellantrieb 11 ein eigener Drehzahlregler zugeordnet ist. Diese motoreigenen Drehzahlregler 18a und 18b können beispielsweise als P-Regler ausgebildet sein und eine nachgeordnete Begrenzungsstufe 28 umfassen, die das an die Stellantriebe 11 gegebene Sollmoment Mₛₒₗₗ begrenzen kann. Die genannten motoreigenen Drehzahlregler geben dem jeweils zugeordneten Stellantrieb 11 ein Drehmoment vor und bekommen die jeweils gemessene Drehzahl ωᵢₛₜ des jeweiligen Stellantriebs 11 zurück.

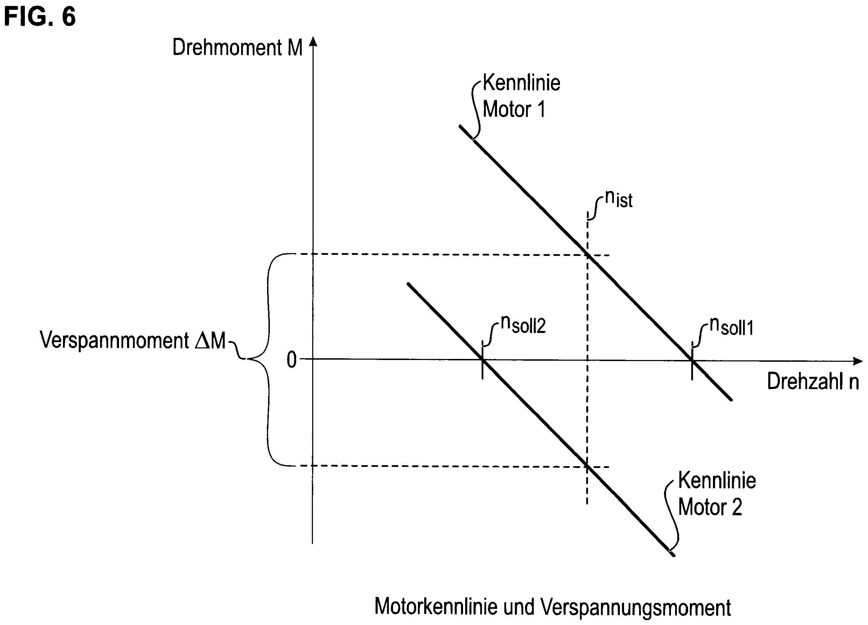

Ein übergeordneter Drehzahlregler 19 gibt jedem motoreigenen Drehzahlregler 18a und 18b eine Solldrehzahl ωₛₒₗₗ vor, wobei durch die Vorgabe unterschiedlicher Solldrehzahlen eine Verspannung realisiert werden kann, wie sie in Fig. 6 verdeutlicht ist. Die motoreigenen Drehzahlregler 18a und 18b können die Kennlinie des jeweiligen Stellantriebs 11 beeinflussen, um hierdurch den Stellantrieb weicher oder härter einzustellen, um entsprechend das Getriebe zu schonen und haltbarer zu machen oder eben eine schärfere Verspannung zu realisieren.

Dabei können sich die Soll-Drehzahlen von zwei Stellantrieben 11 beispielsweise um etwa 100 bis 500, oder auch sehr viel stärker, beispielsweise 3000 Umdrehungen pro Minute oder auch mehr unterscheiden, wobei durch die motoreigenen Drehzahlregler 18a und 18b die Motorkennlinie verändert, insbesondere flacher eingestellt werden kann. Wie Fig. 6 verdeutlicht, kann durch die Verstellung der Motorkennlinien, die entsprechend den vorgegebenen, unterschiedlichen Solldrehzahlen verschoben werden können, das Verspannmoment ΔM realisiert werden.

Der übergeordnete Drehzahlregler 19 kann hierbei ebenfalls als P-Regler ausgebildet sein und zusammen mit den motoreigenen Drehzahlreglern 18a und 18b eine Verspannungs-Einstelleinrichtung 14 bilden, mithilfe derer die Verspannung der Stellantriebe in gewünschter Weise variabel eingestellt werden kann, wie eingangs ausführlich erläutert.

Wie Fig. 7 zeigt, kann der übergeordnete Regler 19 hierbei eingangsseitig das Soll-Signal ϕₛₒₗₗ für den Soll-Azimutwinkel bzw. die Soll-Azimutverstellung und das entsprechende Ist-Signal ϕᵢₛₜ erhalten, das dann in die Soll-Drehzahlen ωₛₒₗₗ für die motoreigenen Drehzahlregler umgesetzt wird. Hierbei kann vom übergeordneten Regler 19 die äußere Last berücksichtigt werden, wobei insbesondere ein Windsignal, beispielsweise die Windgeschwindigkeit v_{Wind} und/oder ein sich hieraus ergebendes oder damit zusammenhängendes, wahrscheinliches Windmoment, das an der Gondel und/oder dem Rotor angreift, berücksichtigt werden kann, woraus eine Spreizung der Soll-Drehzahl bzw. unterschiedliche Soll-Drehzahlen für die verschiedenen motoreigenen Drehzahlregler 18 bestimmt werden, um in der gewünschten Weise die Verspannung einzustellen.

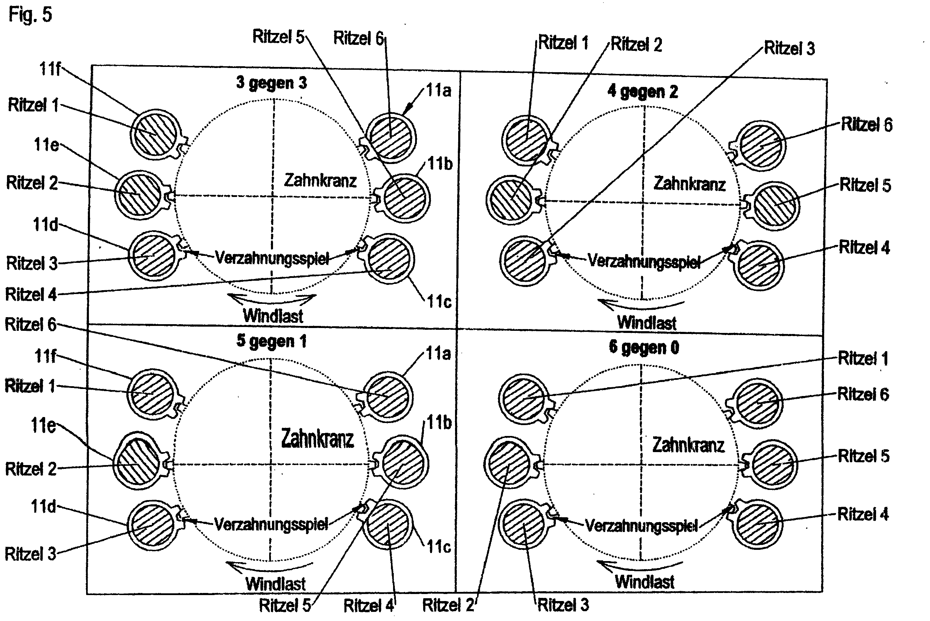

Wie Fig. 5 verdeutlicht, kann hierbei die Verspannungs-Einstelleinrichtung 14 die Anzahl der Stellantriebe 11, die die Verstellung in die Soll-Drehrichtung vorantreiben und die Anzahl der Stellantriebe 11, die einer solchen Verstellung entgegenwirken, variieren. Beispielsweise können bei hin- und hergehenden Windlasten und einer insgesamt gleichseitigen bzw. symmetrischen Belastung gleich viele Stellantriebe in Soll-Drehrichtung arbeiten wie entgegen der Soll-Drehrichtung arbeiten, vgl. die Darstellung links oben der Fig. 5, wonach drei Stellantriebe 11 gegen drei Stellantriebe 11 arbeiten. Darin sind die in die eine Drehrichtung arbeitenden Stellantriebe linksschraffiert (d.h. mit einer Schraffur von rechts unten nach links oben), während die in die entgegengesetze Richtung arbeitenden bzw. bremsenden Stellantriebe rechtsschraffiert sing, um die gruppenweise Verspannung und deren Variabilität in Figur 5 zu verdeutlichen.

Je nach Windlast und/oder Belastungen und/oder gewünschter Verspannung können jedoch auch andere Konstellationen wie fünf gegen eins, vier gegen zwei oder sechs gegen null eingestellt werden, vgl. Fig. 5, dort die weiteren Teildarstellungen.

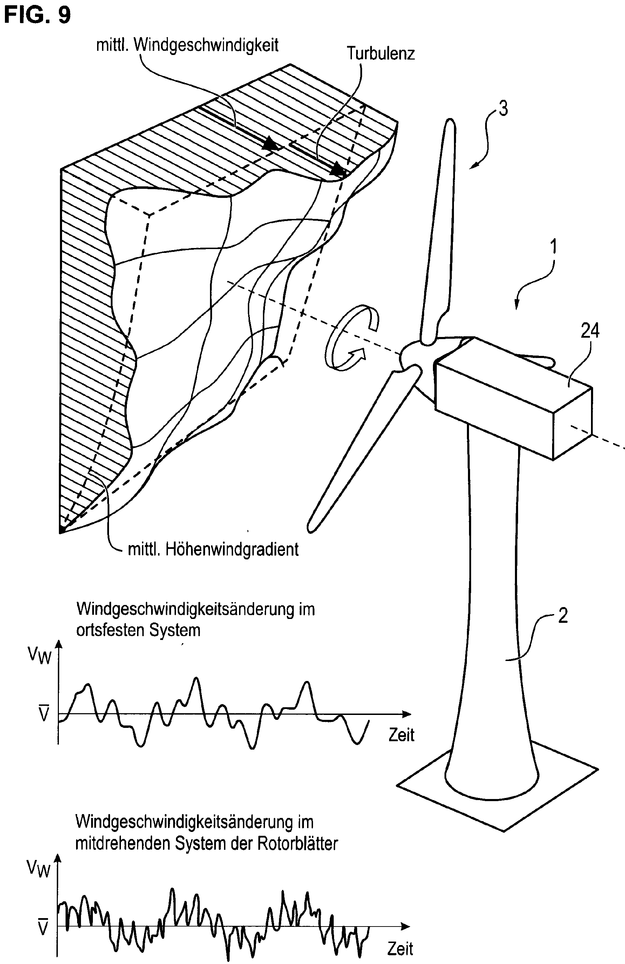

Je nach Ausbildung des Windfelds und der Anstellung des Rotors zu dem Windfeld können unterschiedliche Windlasten und Lastamplituden entstehen. Wie Fig. 9 verdeutlicht, ist ein Windfeld in der Regel über einen relevanten Querschnitt betrachtet - beispielsweise den von den Rotorblättern überstrichenen Querschnittsbereich betrachtet - nicht gleichmäßig, sondern zeigt an verschiedenen Punkten dieses Querschnitts verschiedene Windgeschwindigkeiten, wobei die Windgeschwindigkeit nicht nur über die Höhe zunehmen, sondern auch quer dazu variieren kann. Wie die beiden diagrammhaften Darstellungen der Fig. 9 verdeutlichen, implizieren dabei die Windgeschwindigkeitsänderungen im ortsfesten System daraus abgeleitete Windgeschwindigkeitsänderungen im mitdrehenden System der Rotorblätter.

Während bei Betrachtung des (begrenzten) Querschnitts in einem bestimmten Zeitpunkt das Windfeld in diesem begrenzten Querschnitt eine näherungsweise homogene, d.h. über den Querschnitt sich kaum ändernde Windrichtung aufweisen kann und sich im Wesentlichen durch die verschiedenen Windgeschwindigkeiten kennzeichnet, kommen über die Zeit betrachtet auch drehende Windrichtungen hinzu.

Asymmetrische, d.h. im Wesentlichen einseitige Windlasten entstehen hauptsächlich durch schräge Anströmung des Rotors, was beispielsweise durch Drehen der Windrichtung erfolgen kann.

Lastamplituden entstehen hauptsächlich durch die ungleichmäßige Verteilung der Windgeschwindigkeit auf der Rotorfläche, wie dies Fig. 9 verdeutlicht. In Fig. 9 ist beispielsweise die Windgeschwindigkeit rechts oben am höchsten. Hierdurch entsteht jedesmal, wenn ein Rotorblatt im Sektor rechts oben diese höhere Windgeschwindigkeit durchläuft, ein Drehmoment auf den Azimutantrieb. Um diese Schwankungen besser kontrollieren zu können, kann die Verstell- und/oder Antriebseinheit die Stellantriebe 11 in der eingangs ausführlich erläuterten Weise zueinander verspannen und die Verspannung anhand der ebenfalls eingangs erläuterten Parameter variabel steuern.

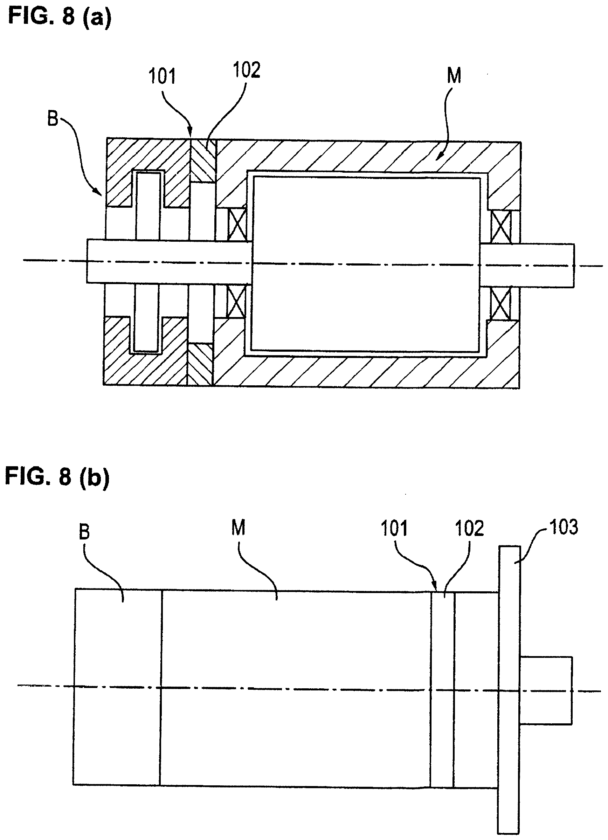

Wie die Figuren 8 (a) und (b) zeigen, können die Stellantriebe Bremsen B aufweisen, um im Stillstand die Motoren M entlasten und/oder eine angefahrene Winkelstellung halten zu können. Wie eingangs erläutert, kann die Verstell- und/oder Antriebseinheit grundsätzlich aber auch ohne die Wirkung solcher Bremsen B durch die Stellantriebe 11 selbst bzw. deren Motoren im Stillstand gehalten werden.

Um die im Stillstand wirkenden Lasten auch bei abgeschalteten Motoren M präzise messen zu können, können den Stellantrieben 11 Drehmomentmesseinrichtungen 101 zugeordnet sein, beispielsweise in Form von Messflanschen 102. Fig. 8 (a) zeigt hierbei eine Einbauvariante eines solchen Messflansches 102 zwischen dem Bremsengehäuse der Bremse B und dem stehenden Motorgehäuse des Motors M.

Alternativ kann ein solcher Messflansch 102 auch zwischen dem Motorgehäuse des Motors M und einem Anschlussflansch 103 vorgesehen werden, um das zwischen dem Motorgehäuse und dem genannten Anschlussflansch wirkende Drehmoment zu messen. Eine solche Anbauvariante besitzt den Vorteil, dass auch bei gelöster Bremse B das Drehmoment bestimmt werden kann, also wenn im Betrieb des Motors das Drehmoment zwischen der Abtriebswelle und dem Motorgehäuse über den Luftspalt des Motors M übertragen wird.

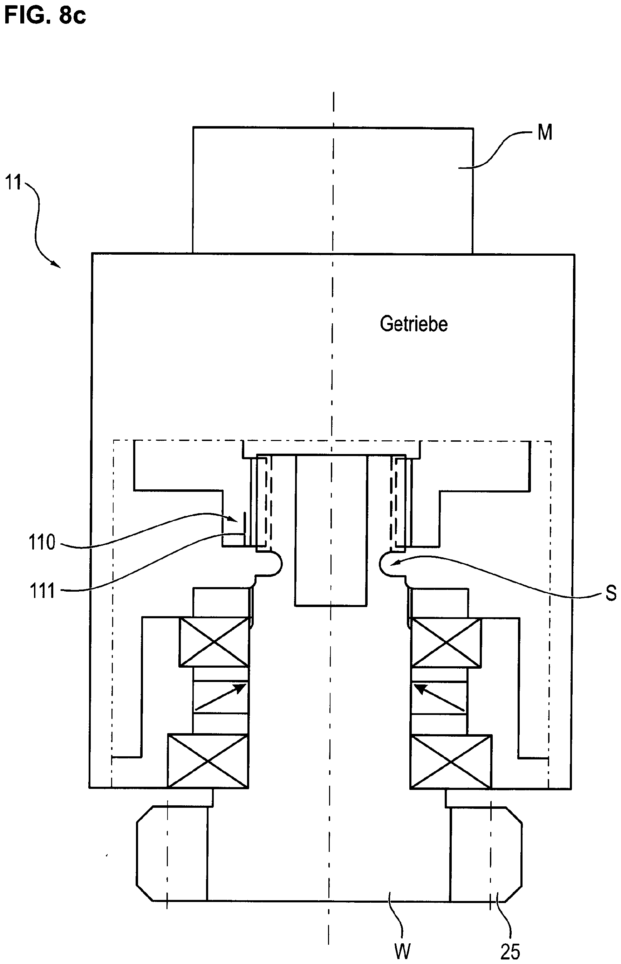

Wie Fig. 8 (c) zeigt, können alternativ oder zusätzlich zu den genannten Drehmomentmesseinrichtungen 101 als Belastungs-Bestimmungseinrichtungen 110 an jedem der Stellantriebe 2 auch Sensorelemente 111 vorgesehen sein, die die Last und/oder das Drehmoment und/oder Kräfte auch bei sich drehenden bzw. bewegenden Antrieben messen können. Solche Messelemente 111 können insbesondere jeweils der Abtriebswelle W der Stellantriebe 2 zugeordnet sein, um die Belastung zwischen Abtriebsritzel und Getriebe messen zu können. Die genannten Messelemente 111 können dabei Torsionsmesser zum Messen der Torsion der Welle oder Kraftmesser oder Dehnungsmessstreifen oder Ähnliches umfassen, um belastungsrelevante Kräfte und/oder Momente und/oder Verformungen zu messen.

Die genannten Belastungs-Bestimmungseinrichtungen 110 bilden dabei einen Teil einer Überlastschutzvorrichtung 112, die die einzelnen Stellantriebe 11 vor Überlastung schützt, und melden den jeweiligen Belastungszustand des jeweiligen Stellantriebs 2 einerseits an die Steuereinrichtung 12, die die Stellantriebe 2 ansteuert und die Antriebsmomente variabel auf die mehreren Stellantriebe 2 verteilt, und andererseits direkt an die anderen Stellantriebe 11, zumindest wenn das Belastungssignal 110s das Erreichen einer Überlastung anzeigt.

Um Überlastzustände zu vermeiden, kommunizieren die Stellantriebe 11 direkt miteinander, um dezentral ein Hilfsmoment bereitzustellen, welches den in die Überlastung zu geraten drohenden Stellantrieb zu entlasten. Die Stellantriebe 11 weisen hierzu jeweils einen dezentralen Steuerbaustein 11s auf, der jeweils dazu konfiguriert ist, von den anderen Stellantrieben, insbesondere von deren Steuerbaustein 11s und/oder von deren Belastungs-Bestimmungseinrichtung 110 ein Belastungssignal 110s und/oder ein Hilfssignal zu erhalten.

Vorteilhafterweise können die genannten Belastungssignale 110s von Auswerteeinheiten ausgewertet werden, die Teil der vorgenannten Steuerbausteine 11s sein können. Dabei können die genannten Auswerteeinrichtungen vorteilhafterweise dazu konfiguriert sein, jeweils das Belastungssignal 110s des "eigenen" Stellantriebs 11 auszuwerten. Wenn die Auswertung ergibt, dass der Stellantrieb 11 in den Überlastungszustand zu geraten droht oder bereits geraten ist, sendet die Auswerteeinrichtung bzw. der Steuerbaustein 11s ein Hilfssignal an zumindest einen der anderen Stellantriebe 11, vorteilhafterweise aber auch an alle anderen Stellantriebe 11.

Die Steuerbausteine 11s der Stellantriebe 11 sind dabei dazu ausgebildet, ein solches Hilfssignal zu prüfen und in ein Hilfsmoment ΔM umzusetzen, welches den Hilfe suchenden Stellantrieb entlastet. Wird das Hilfssignal an mehrere andere Stellantriebe 11 gleichzeitig gesendet, können diese wiederum untereinander kommunizieren, um die Bereitstellung des Hilfsmoments ΔM abzustimmen, beispielsweise dergestalt, dass das Hilfsmoment ΔM in mehrere Teilhilfsmomente aufgeteilt und von mehreren Stellantrieben 11 aufgebracht wird. Alternativ kann ein Abgleich der anderen Stellantriebe 11 dahingehend erfolgen, welcher der Stellantriebe 11 die größten Reserven hat, woraufhin dann dieser Stellantrieb 11 das Hilfsmoment ΔM bereitstellt.

Durch eine solche netzwerkartige Kommunikationsverbindung zwischen den Stellantrieben 11 kann das genannte Hilfsmoment ΔM besonders rasch und nahezu verzögerungsfrei bereitgestellt werden. Insbesondere kann der Kommunikationsweg zu der übergeordneten Steuereinrichtung 12 eingespart werden.

Gleichwohl kann auch die übergeordnete Steuereinrichtung 12 über das bereitgestellte Hilfsmoment ΔM und/oder über die Belastungszustände der einzelnen Stellantriebe 11 informiert werden, woraufhin die Steuereinrichtung 12 die Drehmomentverteilung bzw. die Ansteuerung der einzelnen Stellantriebe anpassen kann.

Insbesondere wird das Antriebsmoment des Stellantriebs, der in die Überlastung zu kommen droht, gedeckelt und/oder reduziert. Zumindest ein weiterer Stellantrieb 2, der noch nicht in die Überlastung zu kommen droht, wird derart angesteuert, dass er stärker belastet wird, wenn er in dieselbe Richtung antreibt wie der zu überlasten drohende Stellantrieb, oder weniger stark verspannend wird, wenn er dem zu überlasten drohenden Antrieb entgegenwirkt, wie dies eingangs erläutert wurde. Die genannte Steuereinrichtung 12 kann hierbei über die Drehzahlregler 18 arbeiten und/oder andere Steuerungsparameter verändern, wie dies eingangs für das Verspannen der Antriebe erläutert wurde.

Reicht eine steuerungstechnische Eingriffsmaßnahme nicht aus, kann die Überlastschutzvorrichtung 112 auch weitere Maßnahmen ergreifen, beispielsweise die in den Figuren 8 (a) und 8 (b) gezeigten Bremsen B aktivieren, insbesondere um ein mechanisches Blockieren der Stellantriebe 2 abfangen zu können, ohne dass es zu weiteren Beschädigungen kommt.

Ferner können die Stellantriebe 2 auch mit Sollbruchstellen versehen sein, insbesondere im Bereich der Abtriebswelle W, wie dies Fig. 8 (c) zeigt, in der die Bezugsziffer S eine Sollbruchstelle in der Abtriebswelle W in Form einer Kerbe zeigt.

## Patentansprüche

1. Verstell- und/oder Antriebseinheit, insbesondere zum Einstellen des Azimut-Winkels eines Windkraftanlagen-Maschinenhauses (24), mit zwei zueinander verdrehbaren Baugruppen (8, 9), zumindest zwei Stellantrieben (11a-n) zum Verdrehen der beiden Baugruppen (8, 9) zueinander sowie einer Steuereinrichtung (12) zum Ansteuern der Stellantriebe (11), wobei den Stellantrieben (11) jeweils eine Belastungs-Bestimmungseinrichtung (110) zum Bestimmen der auf den jeweiligen Stellantrieb (11) wirkenden Belastung zugeordnet ist, **dadurch gekennzeichnet, dass** die Stellantriebe (11) untereinander kommunizierend verbunden sind und jeweils einen Steuerbaustein (11s) zum dezentralen Anpassen des bereitgestellten Drehmoments in Abhängigkeit von Belastungssignalen der Belastungs-Bestimmungseinrichtungen (110) aufweisen, wobei die genannten Steuerbausteine (11s) der Stellantriebe (11) dazu konfiguriert sind, bei Erhalt eines Belastungssignals (110s) von einem jeweils anderen Stellantrieb (11), das ein Erreichen einer Überlastung dieses anderen Stellantriebs (11) angibt, das eigene Drehmoment um ein Hilfsmoment (ΔM) zum Entlasten des genannten anderen Stellantriebs (11) zu verändern.

2. Verstell- und/oder Antriebseinheit nach dem vorhergehenden Anspruch, wobei die dezentralen Steuerbausteine (11s) der Stellantriebe (11) dazu konfiguriert sind, das genannte Hilfsmoment (ΔM) zum Entlasten eines jeweils anderen Stellantriebs (11) zumindest vorübergehend unter Missachtung eines von der zentralen Steuervorrichtung (12) vorgegebenen Sollmoments (Mₛₒₗₗ) bereitzustellen.

3. Verstell- und/oder Antriebseinheit nach einem der vorhergehenden Ansprüche, wobei das genannte Hilfsmoment (ΔM) ein den anderen Stellantrieb, der eine Überlastung meldet, stärker unterstützendes Moment oder weniger verspannendes Moment ist, wobei das genannte Hilfsmoment (ΔM) in seiner Höhe von dem dezentralen Steuerbaustein (11s) in Abhängigkeit des empfangenen Belastungssignals des genannten anderen Stellantriebs variabel anpassbar ist.

4. Verstell- und/oder Antriebseinheit nach einem der vorhergehenden Ansprüche, wobei zumindest einer der Stellantriebe (11) eine Auswerteeinrichtung (11a) zum Auswerten der Belastungssignale der eigenen Belastungs-Bestimmungseinrichtung (110) und/oder der einem anderen Stellantrieb (11) zugeordneten Belastungs-Bestimmungseinrichtung (110) und Generieren eines Hilfs- und/oder Überlastungssignals zum Versenden an die Steuerbausteine (11s) der anderen Stellantriebe (11) aufweist.

5. Verstell- und/oder Antriebseinheit nach einem der vorhergehenden Ansprüche, wobei die dezentralen Steuerbausteine (11s) der Stellantriebe und/oder die Belastungs-Bestimmungseinrichtungen (110) dazu konfiguriert sind, die Belastungssignale auch an die übergeordnete Steuereinrichtung (12) zu senden, wobei die übergeordneten Steuereinrichtung (12) dazu ausgebildet ist, in Abhängigkeit von allen Belastungssignalen die Vorgabe der Sollmomente (Mₛₒₗₗ) für die Stellantriebe (11) anzupassen, wobei die dezentralen Steuerbausteine (11s) dazu konfiguriert sind, die Belastungssignale (110s) erst nach Anpassung und Bereitstellung der Hilfsmomente (ΔM) an die übergeordnete Steuervorrichtung (12) zu senden.

6. Verstell- und/oder Antriebseinheit nach einem der vorhergehenden Ansprüche, wobei die Belastungs-Bestimmungseinrichtungen (110) jeweils zumindest ein Sensorelement (111) zum Messen der auf einer Abtriebswelle (W) des jeweiligen Stellantriebs (11) wirkenden Belastung aufweist, wobei das Sensorelement (111) ein Kraft- und/oder Momenten- und/oder Dehnungs- und/oder Torsionsmesselement aufweist.

7. Verstell- und/oder Antriebseinheit nach einem der vorhergehenden Ansprüche, wobei zumindest einem Stellantrieb (11) eine Drehmomentbestimmungseinrichtung (101) zum Bestimmen des am Stellantrieb (11) induzierten Drehmoments im Stillstand der Verstell- und/oder Antriebseinheit vorgesehen ist, wobei die Drehmomenterfassungseinrichtung (101) einen Messflansch (102) umfasst, der zwischen einem Bremsengehäuse und einem Motorgehäuse angeordnet ist, und/oder einen Messflansch (102), der zwischen einem Motorgehäuse und einem Anschlussflansch des Stellantriebs (11) angeordnet ist, aufweist, wobei die Drehmomentmesseinrichtung einen Drehwinkelsensor zum Bestimmen einer Verdrehung eines Abtriebsrads, insbesondere -ritzels (25), im Stillstand des Stellantriebs aufweist.

8. Verstell- und/oder Antriebseinheit nach einem der vorhergehenden Ansprüche, wobei die Steuerbausteine (11s) dazu ausgebildet sind, die Verteilung der Antriebsmomente vorrangig nach dem Gesichtspunkt des Überlastschutzes zu verteilen und die Verteilung zum Verspannen abändert, wenn dies der Überlastschutz erfordert, wobei die Steuerbausteine (11s) des Stellantriebs (11) derart ausgebildet sind, dass zum Zwecke des Überlastschutzes die von der zentralen Steuereinheit (12) vorgegebene Verteilung der Antriebsmomente so wenig wie möglich verändert und das Hilfsmoment (ΔM) nur so groß wie notwendig bestimmt wird, um einen Stellantrieb (11) vor Überlastung zu schützen.

9. Verstell- und/oder Antriebseinheit nach einem der vorhergehenden Ansprüche, wobei bei vollständigem Ausschöpfen des steuerungstechnischen Überlastschutzes Bremsen (B) zum Halten und/oder Bremsen der Stellantriebe (11) aktiviert werden.

10. Verstell- und/oder Antriebseinheit nach einem der vorhergehenden Ansprüche, wobei die Stellantriebe (11) jeweils zumindest einen Elektromotor umfassen.

11. Verstell- und/oder Antriebseinheit nach einem der vorhergehenden Ansprüche, wobei die zentrale Steuereinrichtung (12) dazu ausgebildet ist, die Antriebsmomente (M) unterschiedlich auf die Stellantriebe (11a-n) zu verteilen, so dass beim Verdrehen der Baugruppen in einer Solldrehrichtung und/oder im Stillstand zumindest ein Stellantrieb (11a) mit einem Drehmoment in einer Drehrichtung und zumindest ein Stellantrieb (11e) mit einem Drehmoment in entgegengesetzter Drehrichtung betrieben wird, um die Stellantriebe (11) zu verspannen, wobei die Steuereinrichtung (12) eine Lastbestimmungseinrichtung (13) zum Bestimmen einer variablen äußeren Last auf die Baugruppen (8, 9) und eine Verspannungs-Einstelleinrichtung (14) zum variablen Einstellen der Stärke der Verspannung der Stellantriebe (11) in Abhängigkeit der variablen äußeren Last auf die zu verstellenden Baugruppen (8, 9) aufweist, wobei die Verspannungs-Einstelleinrichtung (14) dazu ausgebildet ist, mit zunehmender äußerer Last und/oder mit zunehmenden Lastschwankungen die Verspannung der Stellantriebe (11) stufenweise oder stufenlos zu erhöhen.

12. Verstell- und/oder Antriebseinheit nach einem der vorhergehenden Ansprüche, wobei die Lastbestimmungseinrichtung (13)
- eine Winderfassungseinrichtung (15) zum Erfassen der Windstärke aufweist und die Verspannungs-Einstelleinrichtung (14) dazu ausgebildet ist, mit zunehmender Windstärke die Verspannung der Stellantriebe (11) zu erhöhen, und/oder
- eine Winderfassungseinrichtung (15) zum Erfassen der Windrichtung und/oder der Windlasten aufweist und die Verspannungs-Einstelleinrichtung (14) dazu ausgebildet ist, bei hin- und herpendelnden Windlasten eine symmetrische Verspannung, bei der gleich viele Stellantriebe (11a, b, c) mit einem Drehmoment in die eine Drehrichtung wie Stellantriebe (11d, e, f) mit einem Drehmoment in die entgegengesetzte Drehrichtung betrieben werden, und bei Windlasten, die zu einer einseitigen Belastung der Stellantriebe führen, eine asymmetrische Verspannung, bei der mehr Stellantriebe mit einem Drehmoment in die eine Drehrichtung als Stellantriebe mit einem Drehmoment in die entgegengesetzte andere Drehrichtung und/oder weniger Stellantriebe mit einem Drehmoment in die eine Drehrichtung als Stellantriebe mit einem Drehmoment in die entgegengesetzte andere Drehrichtung betrieben werden, einzustellen, und/oder
- einen Lastamplitudenbestimmer zum Bestimmen der an zumindest einem der Stellantriebe (11) auftretenden Lastamplituden aufweist und die Verspannungs-Einstelleinrichtung (14) dazu ausgebildet ist, mit zunehmenden Lastamplituden die Verspannung der Stellantriebe (11) zu erhöhen, und/oder
- einen Drehmomentbestimmer zum Bestimmen eines mittleren Drehmoments der Stellantriebe (11) aufweist und die Verspannungs-Einstelleinrichtung (14) dazu ausgebildet ist, die Verspannung der Stellantriebe (11) in Abhängigkeit des mittleren Drehmoments zu verändern, wobei die Verspannungs-Einstelleinrichtung (14) dazu ausgebildet ist, bei zunehmend stärker in eine Drehrichtung gehendem mittleren Drehmoment, das eine zunehmende Einseitigkeit der Last auf die Verstell- und/oder Antriebseinheit anzeigt, die Stellantriebe zunehmend asymmetrisch zu verspannen, insbesondere eine zunehmend größere Anzahl an Stellantrieben (11) in die eine Richtung und/oder eine zunehmend kleinere Anzahl an Stellantrieben (11) in die entgegengesetzte andere Drehrichtung zu betreiben, und/oder
- eine Blattwinkelerfassungseinrichtung (16) zum Erfassen eines Anstell- oder Pitchwinkels zumindest eines Rotorblatts (5) aufweist und die Verspannungs-Einstelleinrichtung (14) dazu ausgebildet ist, die Stärke der Verspannung der Stellantriebe (11) in Abhängigkeit des erfassten Pitchwinkels einzustellen, insbesondere bei Pitchwinkeln, die bei höheren Windstärken und/oder höheren Anlagenleistungen eingestellt werden, eine höhere Verspannung einzustellen als bei Pitchwinkeln, die bei niedrigeren Windstärken und/oder niedrigeren Anlagenleistungen eingestellt werden, und/oder
- eine Anlagenleistungsbestimmungseinrichtung (17) zum Bestimmen einer Windkraftanlagenleistung aufweist und die Verspannungs-Einstelleinrichtung (14) dazu ausgebildet ist, die Stärke der Verspannung der Stellantriebe (11) in Abhängigkeit der bestimmten Anlagenleistung variabel einzustellen, insbesondere bei höheren Anlagenleistungen eine stärkere Verspannung und bei niedrigeren Anlagenleistungen eine niedrigere Verspannung einzustellen.

13. Verstell- und/oder Antriebseinheit nach einem der vorhergehenden Ansprüche, wobei die Lastbestimmungseinrichtung (13) dazu ausgebildet ist, die äußere Last auf die Verstell- und/oder Antriebseinheit und/oder deren Stellantriebe (11) im Stillstand der Verstell- und/oder Antriebseinheit zu bestimmen.

14. Verstell- und/oder Antriebseinheit nach einem der vorhergehenden Ansprüche, wobei eine Umschaltsteuerungsvorrichtung zum Umschalten der Stellantriebe (11) zwischen Bremsbetrieb und Motorbetrieb und/oder Motorbetrieb und Bremsbetrieb dazu vorgesehen ist, ein am Stellantrieb (11) induziertes Drehmoment zu überwachen und den Umschaltvorgang in einer Phase minimalen Drehmoments und/oder einer Phase eines im Vergleich zum mittleren Drehmoment niedrigen Drehmoments den Umschaltvorgang auszuführen.

15. Verstell- und/oder Antriebseinheit nach einem der vorhergehenden Ansprüche, wobei die Verspannungs-Einstelleinrichtung (14) dazu ausgebildet ist,
- die Höhe der Verspannung der Stellantriebe (11) durch Verändern der Anzahl der Stellantriebe (11), die mit einem Drehmoment in die eine Drehrichtung betrieben werden und/oder Verändern der Anzahl der Stellantriebe, die mit einem Drehmoment in entgegengesetzter Drehrichtung betrieben werden, einzustellen, und/oder
- die Stärke der Verspannung der Stellantriebe (11) durch variables Verändern der Spreizung der Solldrehzahlen (ω_{soll,mot}) der Stellantriebe (11) einzustellen, und/oder
- zumindest einem der Stellantriebe (11) eine Solldrehzahl (ω_{soll,mot}) vorzugeben, die sich von der zumindest einem weiteren Stellantrieb (11) vorgegebenen Solldrehzahl (ω_{soll,mot}) um 100 bis 500 1/min unterscheidet, und/oder
- die Motorkennlinien der Stellantriebe (11) zu verändern, und/oder
- zumindest einem der Stellantriebe (11) ein Solldrehmoment (Mₛₒₗₗ₁) vorzugeben, das sich von dem zumindest einem weiteren der Stellantriebe (11) vorgegebenen Solldrehmoment (Mₛₒₗₗ₂) um zumindest 10 N m, vorzugsweise 15 bis 40 N m, unterscheidet.

16. Verstell- und/oder Antriebseinheit nach einem der vorhergehenden Ansprüche, wobei die Steuereinrichtung (12) für jeden der mehreren Stellantriebe (11) einen motoreigenen Drehzahlregler (18a-n), der dem jeweils zugehörigen Stellantrieb (11) ein Drehmoment vorgibt und die Ist-Drehzahl des zugehörigen Stellantriebs (11) zurück erhält, sowie einen den motoreigenen Drehzahlreglern (18a-n) übergeordneten Drehzahlregler (19) umfasst, der dazu ausgebildet ist, den motoreigenen Drehzahlreglern (18an) eine Solldrehzahl vorzugeben, wobei der übergeordnete Drehzahlregler (19) Eingangskanäle zum Empfang mehrerer Eingangssignale umfassend zumindest einen Solldrehwinkel (ϕₛₒₗₗ) der zu verdrehenden Baugruppe (9) und ein Windgeschwindigkeitssignal (v_{Wind}) und ein Drehmomentsignal (M_{Wind}) aufweist und dazu ausgebildet ist, die Solldrehzahl (ωₛₒₗₗ) für die motoreigenen Drehzahlregler (18a-n) in Abhängigkeit des genannten Solldrehwinkels (ϕₛₒₗₗ), der Windgeschwindigkeit (v_{Wind}) und des Drehmoments (M_{Wind}) zu bestimmen, wobei die motoreigenen Drehzahlregler (18a-n) dazu ausgebildet sind, die Motorkennlinien der zugeordneten Stellantriebe (11) in Abhängigkeit der von dem übergeordneten Drehzahlregler (19) vorgegebenen Solldrehzahlen zu verändern, insbesondere bei zunehmenden Solldrehzahlspreizungen abzuflachen.

17. Verstell- und/oder Antriebseinheit nach einem der vorhergehenden Ansprüche, wobei die zumindest zwei Stellantriebe (11), die beiden zueinander verdrehbaren Baugruppen (8, 9) sowie die Steuereinrichtung ein vormontiertes Einbaumodul bilden, wobei die beiden zueinander verdrehbaren Baugruppen (8, 9) Anschlussmittel zum Anschließen an weitere Anlagenkomponenten besitzen, wobei die zueinander verdrehbaren Baugruppen (8, 9) Lagerringe eines Großwälz- und/oder Gleitlagers (7) bilden und die Stellantriebe (11) innerhalb eines Innenraums, der von den Lagerringen begrenzt wird, angeordnet sind, wobei das Großwälz- und/oder Gleitlager ein Azimut-Lager (7) bildet, das einerseits Anschlussmittel zum Anschließen an einen Turm (2) einer Windkraftanlage (1) und andererseits Anschlussmittel zum Anschließen eines Maschinenhauses (24) der Windkraftanlage (1) und/oder eines das Maschinenhaus (24) tragenden Turmstücks aufweist.

18. Verstell- und/oder Antriebseinheit nach einem der vorhergehenden Ansprüche, wobei zumindest einer der Stellantriebe (11), der an einer der Baugruppen (8) befestigt ist, ein Antriebsrad, insbesondere Ritzel (25), aufweist, das mit einem Ring, insbesondere Zahnkranz, der an der anderen Baugruppe (9) befestigt ist, in Wälzeingriff steht und durch zumindest zwei Lager (L1, L2) beidseits des Antriebsrads abgestützt ist, insbesondere zumindest näherungsweise symmetrisch abgestützt ist, wobei die beiden Lager (L1, L2) beide direkt oder indirekt an der Baugruppe (8) befestigt sind, an der der Stellantrieb (11) befestigt ist, wobei eine das genannte Antriebsrad, insbesondere Ritzel (25), tragende Welle (W) von einem Getriebe und/oder Motor des Stellantriebs (11) lösbar und/oder drehmomentübertragend verbindbar, insbesondere zusammensteckbar, ausgebildet ist.

19. Verstell- und/oder Antriebseinheit nach einem der vorhergehenden Ansprüche, wobei zumindest einem der Stellantriebe (11) eine Drehmomentbestimmungseinrichtung zum Bestimmen des auf den Stellantrieb (11) im Stillstand wirkenden Lastmoments zugeordnet ist, wobei die Drehmomentbestimmungseinrichtung einen Drehmomentmessflansch aufweist, der zwischen einem Stator eines Elektromotors des Stellantriebs (11) und einer Bremse oder zwischen dem genannten Stator und einem Anschlussflansch des Stellantriebs vorgesehen ist.

20. Windkraftanlage mit einer Verstell- und/oder Antriebseinheit, die gemäß einem der vorhergehenden Ansprüche ausgebildet ist.

21. Verfahren zum Steuern einer Verstelleinheit, die gemäß einem der Ansprüche 1-19 ausgebildet ist, wobei die individuellen Belastungen der einzelnen Stellantriebe (11) mittels Belastungs-Bestimmungseinrichtungen (110) überwacht werden, **dadurch gekennzeichnet, dass** die Stellantriebe (11) direkt untereinander kommunizieren und auf Belastungssignale (110s) der Belastungs-Bestimmungseinrichtungen (110) anderer Stellantriebe (11) reagieren, wobei bei Empfang eines Belastungssignals (110s) von einem anderen Stellantrieb (11), welches das Erreichen einer Überlastung des genannten anderen Stellantriebs (11) angibt, ein das Belastungssignal (110s) empfangender Stellantrieb (11) sein bereitgestelltes Drehmoment um ein Hilfsmoment (ΔM) in Abhängigkeit des empfangenen Belastungssignals (110s) verändert, so dass der genannte andere Stellantrieb (11) entlastet wird.

22. Verfahren nach dem vorhergehenden Anspruch, wobei das genannte Hilfsmoment (ΔM) unter zumindest vorübergehender Missachtung des Solldrehmoment-Stellsignals der übergeordneten Steuereinrichtung (12) bereitgestellt wird, wobei beim Verdrehen der Baugruppen relativ zueinander und/oder im Stillstand der Baugruppen zumindest einer der Stellantriebe derart angesteuert wird, dass der Stellantrieb ein Drehmoment in eine Drehrichtung erzeugt, und zumindest ein weiterer Stellantrieb derart angesteuert wird, dass er ein Drehmoment in die entgegengesetzte andere Drehrichtung erzeugt, um beim Verdrehen der Baugruppen zueinander die Stellantriebe zu verspannen, wobei die Stärke der Verspannung der Stellantriebe gegeneinander in Abhängigkeit einer variablen äußeren Last auf die zu verstellenden Baugruppen und/oder in Abhängigkeit der Reaktion der Stellantriebe auf eine solche äußere variable Last variabel eingestellt wird.

## Claims

1. Adjustment and/or drive unit, in particular to set the azimuth angle of a wind turbine equipment pod (24), having two assemblies (8, 9) rotatable relative to one another, at least two actuating drives (11a-n) for rotating the two assemblies (8, 9) relative to one another, and a control device (12) for controlling the actuating drives (11), wherein a respective load determination device (110) for determining the load acting on the respective actuating drive (11) is associated with the actuating drives (11), **characterized in that** the actuating drives (11) are connected for communication with other each other and each have a control module (11s) for the decentralized adjustment of the provided torque in dependence on load signals of the load-determining devices (110), wherein the said control modules (11s) of the actuating drives (11) are configured to change, upon receipt of a load signal (110s) from another actuating drive (11) that indicates that overloading of said other actuating drive (11) has been reached, its own torque by an auxiliary torque (ΔM) in order to relieve said other actuating drive (11).

2. Adjustment and/or drive unit in accordance with the preceding claim, wherein the decentralized control modules (11s) of the actuating drives (11) are configured to provide said auxiliary torque (ΔM) at least temporarily to relieve a respective other actuating drive (11) while disregarding a desired torque (Mₛₒₗₗ) specified by the central control device (12).

3. Adjustment and/or drive unit in accordance with one of the preceding claims, wherein said auxiliary torque (ΔM) is a torque supporting said other actuating drive that reports an overload more or is a less bracing torque, wherein the level of said auxiliary torque (ΔM) is variably adaptable by the decentralized control module (11s) in dependence on the received load signal of said other actuating drive.

4. Adjustment and/or drive unit in accordance with one of the preceding claims, wherein at least one of the actuating drives (11) has an evaluation device (11a) for evaluating the load signals of its own load determination device (110) and/or of the load determination device (110) associated with another actuating drive (11) and for generating an auxiliary and/or overload signal for sending to the control modules (11s) of the other actuating drives (11).

5. Adjustment and/or drive unit in accordance with one of the preceding claims, wherein the decentralized control modules (11s) of the actuating drives and/or the load determination devices (110) are configured also to send the load signals to the higher ranking control device (12), wherein the higher ranking control device (12) is configured to adapt the specification of the desired torques (Mₛₒₗₗ) for the actuating drives (11) in dependence on all the load signals, wherein the decentralized control modules (11s) are configured only to send the load signals (110s) to the higher ranking control device (12) after adaptation and provision of the auxiliary torques (ΔM).

6. Adjustment and/or drive unit in accordance with one of the preceding claims, wherein the load determination devices (110) each have a respective one sensor element (111) for measuring the load acting on an output shaft (W) of the respective actuating drive (11), wherein the sensor element (111) has a force and/or torque and/or strain and/or torsion measuring element.

7. Adjustment and/or drive unit in accordance with one of the preceding claims, wherein a torque determination device (101) for determining the torque induced at the actuating drive (11) in a standstill of the adjustment and/or drive unit is provided for at least one actuating drive (11), wherein the torque detection device (101) comprises a measuring flange (102) that is arranged between a motor housing and a connector flange of the actuating drive (11), wherein the torque measuring device has an angle of rotation sensor for determining a rotation of an output gear, in particular an output pinion (25), at a standstill of the actuating drive.

8. Adjustment and/or drive unit in accordance with one of the preceding claims, wherein the control modules (11s) are configured to primarily distribute the distribution of the drive torques according to the aspect of overload protection and modifies the distribution for bracing when the overload protection requires, wherein the control modules (11s) of the actuating drive (11) are configured such that the distribution of the drive torques specified by the central control unit (12) is changed as little as possible for the purpose of overload protection and the auxiliary torque (ΔM) is only determined to be as large as necessary to protect an actuating drive (11) from overload.

9. Adjustment and/or drive unit in accordance with one of the preceding claims, wherein on a complete exploitation of the technical control overload protection, brakes (B) are activated to hold and/or brake the actuating drives (11).

10. Adjustment and/or drive unit in accordance with one of the preceding claims, wherein the actuating drives (11) each comprise at least one electric motor.

11. Adjustment and/or drive unit in accordance with one of the preceding claims, wherein the central control device (12) is configured to distribute the drive torques (M) differently over the actuating drives (11a-n) so that on a rotation of the assemblies in a desired direction of rotation and/or at a standstill, at least one actuating drive (11a) is operated at a torque in one direction of rotation and at least one actuating drive (11e) is operated at a torque in the opposite direction of rotation in order to brace the actuating drives (11), wherein the control device (12) comprises a load determination device (13) for determining a variable external load on the assemblies (8, 9) and comprises a bracing setting device (14) for a variable setting of the level of the bracing of the actuating drives (11) in dependence on the variable external load on the assemblies (8, 9) to be adjusted, wherein the bracing setting device (14) is configured to increase the bracing of the actuating drives (11) step-wise or continuously with an increasing external load and/or with increasing load fluctuations.

12. Adjustment and/or drive unit in accordance with one of the preceding claims, wherein the load determination device (13) comprises
- a wind detection device (15) for detecting the wind strength and the bracing setting device (14) is configured to increase the bracing of the actuating drives (11) as the wind strength increases, and/or
- a wind detection device (15) for detecting the wind direction and/or the wind loads and the bracing setting device (14) is configured on wind loads oscillating to and fro to set a symmetrical bracing in which the same number of actuating drives (11a, b, c) are operated at a torque in the one direction of rotation as actuating drives (11d, e, f) are operated at a torque in the opposite direction of rotation, and on wind loads that result in a unilateral load of the actuating drives, to set an asymmetrical bracing in which more actuating drives are operated at a torque in the one direction of rotation as actuating drives are operated at a torque in the other opposite direction of rotation and/or in which fewer actuating drives are operated at a torque in the one direction of rotation as actuating drives are operated at a torque in the other opposite direction of rotation, and/or
- a load amplitude determiner to determine the load amplitudes arising at at least one of the actuating drives (11) and the bracing setting device (14) is configured to increase the bracing of the actuating drives (11) as the load amplitudes increase, and/or
- a torque determiner to determine a mean torque of the actuating drives (11) and the bracing setting device (14) is configured to change the bracing of the actuating drives (11) in dependence on the mean torque, wherein the bracing setting device (14) is configured to brace the actuating drives increasingly asymmetrically, in particular to operate an increasingly larger number of actuating drives (11) in the one direction and/or an increasingly smaller number of actuating drives (11) in the other opposite direction of rotation on a mean torque that moves increasingly more strongly in one direction of rotation and that indicates an increasing one-sidedness of the load on the adjustment and/or drive unit, and/or
- a blade angle detection device (16) for detecting an attack or pitch angle of at least one rotor blade (5) and the bracing setting device (14) is configured to set the amount of the bracing of the actuating drives (11) in dependence on the detected pitch angle, in particular to set a higher bracing at pitch angles that are set at higher wind strengths and/or at higher turbine powers than at pitch angles that are set at lower wind strengths and/or lower turbine powers, and/or
- a turbine power determination device (17) for determining a wind turbine power and the bracing setting device (14) is configured to variably set the amount of the bracing of the actuating drives (11) in dependence on the determined turbine power, in particular to set a greater bracing at higher turbine powers and to set a lower bracing at lower turbine powers.

13. Adjustment and/or drive unit in accordance with one of the preceding claims, wherein the load determination device (13) is configured to determine the external load on the adjustment and/or drive unit and/or on its actuating drives (11) at a standstill of the adjustment and/or drive unit.

14. Adjustment and/or drive unit in accordance with one of the preceding claims, wherein a switchover control device to switch over the actuating drives (11) between brake operation and motor operation and/or motor operation and brake operation is provided to monitor a torque induced at the actuating drive (11) and to carry out the switchover procedure in a phase of minimal torque and/or a phase of a torque low in comparison with the mean torque.

15. Adjustment and/or drive unit in accordance with one of the preceding claims, wherein the bracing setting device (14) is configured
- to set the level of the bracing of the actuating drives (11) by changing the number of actuating drives (11) that are operated at a torque in the one direction of rotation and/or by changing the number of actuating drives that are operated at a torque in the opposite direction of rotation, and/or
- to set the level of the bracing of the actuating drives (11) by a variable changing of the spread of the desired speeds (ω_{sοll,mot}) of the actuating drives (11), and/or
- to specify a desired speed (ω_{soll, mot}) for at least one of the actuating drives (11) that differs from the desired speed (ω_{sοll, mot}) specified for at least one further actuating drive (11) by 100 to 500 1/min, and/or
- to change the motor characteristics of the actuating drives (11), and/or
- to specify a desired torque (Mₛₒₗₗ₁) for at least one of the actuating drives (11) that differs from the desired torque (Mₛₒₗₗ₂) specified for at least a further one of the actuating drives (11) by at least 10 N m, preferably 15 to 40 N m.

16. Adjustment and/or drive unit in accordance with one of the preceding claims, wherein the control device (12) comprises a speed regulator (18a-n) for each of the plurality of actuating drives (11) that is specific to the motor, that specifies a torque for the respective associated actuating drive (11), and that receives the actual speed of the associated actuating drive (11) back, and comprises a speed regulator (19) that is higher ranking than the speed regulators (18a-n) specific to the motors and that is configured to specify a desired speed for the speed regulators (18a-n) specific to the motors, wherein the higher ranking speed regulator (19) has input channels for receiving a plurality of input signals comprising at least one desired angle of rotation (ϕₛₒₗₗ) of the assembly (9) to be rotated and a wind speed signal (v_{Wind}) and a torque signal (M_{Wind}), and is configured to determine the desired speed (ω_{sοll}) for the speed regulators (18an) specific to the motors in dependence on said desired angle of rotation (ϕₛₒₗₗ), on the wind speed (v_{Wind}), and on the torque (M_{Wind}), wherein the speed regulators (18a-n) specific to the motors are configured to change the motor characteristics of the associated actuating drives (11) in dependence on the desired speeds specified by the higher ranking speed regulator (19), in particular to flatten them as the desired speed spreads increase.

17. Adjustment and/or drive unit in accordance with one of the preceding claims, wherein the at least two actuating drives (11), the two assemblies (8, 9,) rotatable relative to one another, and the control device form a pre-assembled installation module, wherein the two assemblies (8, 9) rotatable relative to one another have connector means for connecting to further turbine components, wherein the assemblies (8, 9) rotatable relative to one another form bearing races of a large roller and/or large plain bearing (7) and the actuating drives (11) are arranged within an inner space that is bounded by the bearing races, wherein the large roller and/or plain bearing form(s) an azimuth bearing (7) that, on the one hand, has connector means for connecting to a tower (2) of a wind turbine (1) and, on the other hand, has connector means for connecting an equipment pod (24) of the wind turbine (1) and/or of a tower piece carrying the equipment pod (24).

18. Adjustment and/or drive unit in accordance with one of the preceding claims, wherein at least one of the actuating drives (11) that is fastened to one of the assemblies (8) has a drive gear, in particular a pinion (25), that is in rolling engagement with a ring, in particular a cog, that is fastened to the other assembly (9) and is supported, in particular at least approximately symmetrically, by at least two bearings (L1, L2) at both sides of the drive gear, wherein the two bearings (L1, L2) are both directly or indirectly fastened to the assembly (8) to which the actuating drive (11) is fastened, wherein a shaft (W) carrying said drive gear, in particular said pinion (25), is configured as releasable from a transmission and/or motor of the actuating drive (11) and/or as connectable in a torque transmitting manner, in particular in a manner able to be plugged together.

19. Adjustment and/or drive unit in accordance with one of the preceding claims, wherein a torque determination device for determining the load torque acting on the actuating drive (11) at a standstill is associated with at least one of the actuating drives (11), wherein the torque determination device has a torque measuring flange that is provided between a stator of an electric motor of the actuating drive (11) and a brake, or between said stator and a connector flange of the actuating drive.

20. Wind turbine having an adjustment and/or drive unit that is configured in accordance with one of the preceding claims.

21. A method of controlling an adjustment unit that is configured in accordance with one of the claims 1 to 19, wherein the individual loads of the individual actuating drives (11) are monitored by means of load determination devices (110), **characterized in that** the actuating drives (11) communicate directly with one another and respond to load signals (110s) of the load determination devices (110) of other actuating drives (11), wherein, on receiving a load signal (110s) from another actuating drive (11) that indicates the reaching of an overload of said other actuating drive (11), an actuating drive (11) receiving the load signal (110s) changes its provided torque by an auxiliary torque (ΔM) in dependence on the received load signal (110s) so that said other actuating drive (11) is relieved.

22. Method in accordance with the preceding claim, wherein said auxiliary torque (ΔM) is provided while at least temporarily disregarding the desired torque actuating signal of the higher ranking control device (12), wherein, on a rotation of the assemblies relative to one another and/or at a standstill of the assemblies, at least one of the actuating drives is controlled such that the actuating drive generates a torque in one direction of rotation and at least one further actuating drive is controlled such that it generate a torque in the other opposite direction of rotation to brace the actuating drives on a rotation of the assemblies relative to one another, wherein the strength of the bracing of the actuating drives relative to one another is variably set in dependence on a variable external load on the assemblies to be adjusted and/or in dependence on the reaction of the actuating drives to such an external variable load.

## Revendications

1. Unité de réglage et/ou d'entraînement, en particulier destinée au réglage de l'angle azimutal d'une salle des machines d'éolienne (24), comprenant deux ensembles (8, 9) rotatifs l'un par rapport à l'autre, au moins deux mécanismes d'actionnement (11a-n) destinés à faire tourner les deux ensembles (8, 9) l'un par rapport à l'autre ainsi qu'un dispositif de commande (12) pour la commande des mécanismes d'actionnement (11), un dispositif de détermination de la charge (110) étant associé respectivement aux mécanismes d'actionnement (11) pour déterminer la charge agissant sur le mécanisme d'actionnement (11) respectif, **caractérisée en ce que** les mécanismes d'actionnement (11) sont raccordés de manière à pouvoir communiquer entre eux et comportent respectivement un composant de commande (11s) pour l'adaptation décentralisée du couple fourni en fonction de signaux de charge provenant des dispositifs de détermination de la charge (110), lesdits composants de commande (11s) des mécanismes d'actionnement (11) étant conçus pour, lorsqu'ils reçoivent un signal de charge (110s) d'un autre mécanisme d'actionnement (11) respectif qui indique qu'une surcharge de cet autre mécanisme d'actionnement (11) est atteinte, modifier leur propre couple à l'aide d'un couple de renfort (ΔM) pour soulager ledit autre mécanisme d'actionnement (11).

2. Unité de réglage et/ou d'entraînement selon la revendication précédente, dans laquelle les composants de commande (11s) décentralisés des mécanismes d'actionnement (11) sont configurés pour fournir ledit couple de renfort (ΔM) pour soulager un autre mécanisme d'actionnement (11) respectif au moins temporairement sans tenir compte d'un couple théorique (Mₛₒₗₗ) prédéfini par le dispositif de commande (12) central.

3. Unité de réglage et/ou d'entraînement selon l'une des revendications précédentes, dans laquelle ledit couple de renfort (ΔM) est un couple apportant davantage de soutien à ou un couple entraînant moins de contrainte de l'autre mécanisme d'actionnement qui signale une surcharge, la hauteur dudit couple de renfort (ΔM) pouvant être adaptée de manière variable par le composant de commande (11s) décentralisé en fonction du signal de charge reçu dudit autre mécanisme d'actionnement.

4. Unité de réglage et/ou d'entraînement selon l'une des revendications précédentes, dans laquelle au moins un des mécanismes d'actionnement (11) comporte un dispositif d'évaluation (11a) destiné à évaluer les signaux de charge de son propre dispositif de détermination de la charge (110) et/ou du dispositif de détermination de la charge (110) associé à un autre mécanisme d'actionnement (11) et à générer un signal de renfort et/ou de surcharge destiné à être envoyé aux composants de commande (11s) des autres mécanismes d'actionnement (11).

5. Unité de réglage et/ou d'entraînement selon l'une des revendications précédentes, dans laquelle les composants de commande (11s) décentralisés des mécanismes d'actionnement et/ou les dispositifs de détermination de la charge (110) sont configurés pour envoyer les signaux de charge également au dispositif de commande (12) de niveau supérieur, le dispositif de commande (12) de niveau supérieur étant conçu pour adapter, en fonction de tous les signaux de charge, la définition des couples théoriques (Mₛₒₗₗ) pour les mécanismes d'actionnement (11), les composants de commande (11s) décentralisés étant configurés pour envoyer les signaux de charge (110s) uniquement après l'adaptation et la mise du couple de renfort (ΔM) à la disposition du dispositif de commande (12) de niveau supérieur.

6. Unité de réglage et/ou d'entraînement selon l'une des revendications précédentes, dans laquelle les dispositifs de détermination de la charge (110) comportent respectivement au moins un élément capteur (111) pour mesurer la charge agissant sur un arbre de sortie (W) du mécanisme d'actionnement (11) respectif, l'élément capteur (111) comportant un élément de mesure de la force et/ou du couple et/ou de l'extension et/ou de la torsion.

7. Unité de réglage et/ou d'entraînement selon l'une des revendications précédentes, dans laquelle un dispositif de détermination du couple (101) pour déterminer le couple induit sur le mécanisme d'actionnement (11) quand l'unité de réglage et/ou d'entraînement est à l'arrêt est prévu sur un mécanisme d'actionnement (11), le dispositif de détection du couple (101) comprenant un disque de mesure (102), qui est disposé entre un carter de frein et un carter de moteur, et/ou comportant un disque de mesure (102), qui est disposé entre un carter de moteur et une bride de raccordement du mécanisme d'actionnement (11), le dispositif de mesure du couple comportant un capteur d'angle de rotation pour déterminer une torsion d'une roue entraînée, en particulier d'un pignon secondaire (25), quand le mécanisme d'actionnement est à l'arrêt.

8. Unité de réglage et/ou d'entraînement selon l'une des revendications précédentes, dans laquelle les composants de commande (11s) sont conçus pour effectuer la répartition des couples d'entraînement en priorité selon le point de vue de la protection contre les surcharges et modifient la répartition pour la contrainte lorsque la protection contre les surcharges l'exige, les composants de commande (11s) du mécanisme d'actionnement (11) étant conçus de telle manière que, à des fins de protection contre les surcharges, la répartition des couples d'entraînement prédéfinie par l'unité de commande (12) centrale est modifiée le moins possible et le couple de renfort (ΔM) est déterminé d'une grandeur juste nécessaire pour protéger un mécanisme d'actionnement (11) contre les surcharges.

9. Unité de réglage et/ou d'entraînement selon l'une des revendications précédentes, dans laquelle, lorsque la protection contre les surcharges réalisée techniquement par le système de commande est entièrement exploitée, des freins (B) sont activés pour stopper et/ou freiner les mécanismes d'actionnement (11).

10. Unité de réglage et/ou d'entraînement selon l'une des revendications précédentes, dans laquelle les mécanismes d'actionnement (11) comprennent respectivement au moins un moteur électrique.

11. Unité de réglage et/ou d'entraînement selon l'une des revendications précédentes, dans laquelle le dispositif de commande (12) central est conçu pour répartir les couples d'entraînement (M) différemment sur les mécanismes d'actionnement (11a-n), de telle sorte que, lors de la rotation des ensembles dans un sens de rotation de consigne et/ou à l'arrêt, au moins un mécanisme d'actionnement (11a) fonctionne avec un couple dans un sens de rotation et au moins un mécanisme d'actionnement (11e) avec un couple dans le sens de rotation opposé, pour contraindre les mécanismes d'actionnement (11), le dispositif de commande (12) comportant un dispositif de détermination de la charge (13) pour déterminer une charge extérieure variable agissant sur les ensembles (8, 9) et un dispositif de réglage de la contrainte (14) pour le réglage variable de la force de contrainte des mécanismes d'actionnement (11) en fonction de la charge extérieure variable agissant sur les ensembles (8, 9) à régler, le dispositif de réglage de la contrainte (14) étant conçu pour augmenter par paliers ou en continu la contrainte des mécanismes d'actionnement (11) au fur et à mesure que la charge extérieure augmente et/ou que les variations de charge augmentent.

12. Unité de réglage et/ou d'entraînement selon l'une des revendications précédentes, dans laquelle le dispositif de détermination de la charge (13)
- comporte un dispositif de détection du vent (15) pour détecter la force du vent et le dispositif de réglage de la contrainte (14) est conçu pour augmenter la contrainte des mécanismes d'actionnement (11) au fur et à mesure que la force du vent augmente, et/ou
- comporte un dispositif de détection du vent (15) pour détecter la direction du vent et/ou les surcharges de vent et le dispositif de réglage de la contrainte (14) est conçu pour régler, en cas de surcharges de vent oscillantes, une contrainte symétrique, avec laquelle il y a autant de mécanismes d'actionnement (11a, b, c) fonctionnant avec un couple dans un sens de rotation que de mécanismes d'actionnement (11d, e, f) fonctionnant avec un couple dans le sens de rotation opposé, et en cas de surcharges de vent qui entraînent une charge unilatérale des mécanismes d'actionnement, une contrainte asymétrique, avec laquelle il y a plus de mécanismes d'actionnement fonctionnant avec un couple dans le premier sens de rotation que de mécanismes d'actionnement fonctionnant avec un couple dans l'autre sens de rotation, opposé, et/ou moins de mécanismes d'actionnement fonctionnant avec un couple dans le premier sens de rotation que de mécanismes d'actionnement fonctionnant avec un couple dans l'autre sens de rotation, opposé, et/ou
- comporte un organe de détermination de l'amplitude de charge pour déterminer les amplitudes de charge se produisant sur au moins un des mécanismes d'actionnement (11) et le dispositif de réglage de la contrainte (14) est conçu pour augmenter la contrainte des mécanismes d'actionnement (11) au fur et à mesure que les amplitudes de charge augmentent, et/ou
- comporte un organe de détermination du couple pour déterminer un couple moyen des mécanismes d'actionnement (11) et le dispositif de réglage de la contrainte (14) est conçu pour modifier la contrainte des mécanismes d'actionnement (11) en fonction du couple moyen, le dispositif de réglage de la contrainte (14) étant conçu pour, lorsque le couple moyen est de plus en plus fort dans un sens de rotation, ce qui indique un caractère de plus en plus unilatéral de la charge sur l'unité de réglage et/ou d'entraînement, contraindre les mécanismes d'actionnement de manière de plus en plus asymétrique, en particulier faire fonctinner de plus en plus de mécanismes d'actionnement (11) dans le premier sens et/ou de moins en moins de mécanismes d'actionnement (11) dans l'autre sens, opposé, et/ou
- comporte un dispositif de détection de l'angle d'incidence de pale (16) pour détecter un angle d'incidence ou de calage d'au moins une pale de rotor (5), et le dispositif de réglage de la contrainte (14) est conçu pour régler la force de contrainte des mécanismes d'actionnement (11) en fonction de l'angle de calage détecté, en particulier régler une contrainte plus élevée pour des angles de calage qui sont réglés à des forces du vent plus élevées et/ou des puissances d'éolienne plus élevées que pour des angles de calage qui sont réglés à des forces du vent plus faibles et/ou des puissances d'éolienne plus faibles, et/ou
- comporte un dispositif de détermination de la puissance d'éolienne (17) pour déterminer une puissance d'éolienne et le dispositif de réglage de la contrainte (14) est conçu pour régler de manière variable la force de la contrainte des mécanismes d'actionnement (11) en fonction de la puissance d'éolienne déterminée, en particulier régler une contrainte plus élevée avec des puissances d'éolienne plus élevées et une contrainte plus faible avec des puissances d'éolienne plus faibles.

13. Unité de réglage et/ou d'entraînement selon l'une des revendications précédentes, dans laquelle le dispositif de détermination de la charge (13) est conçu pour déterminer la charge extérieure agissant sur l'unité de réglage et/ou d'entraînement et/ou ses mécanismes d'actionnement (11) quand l'unité de réglage et/ou d'entraînement est à l'arrêt.

14. Unité de réglage et/ou d'entraînement selon l'une des revendications précédentes, dans laquelle un dispositif de commande de commutation pour commuter les mécanismes d'actionnement (11) entre un mode freinage et un mode moteur et/ou un mode moteur et un mode freinage est prévu pour surveiller un couple induit sur le mécanisme d'actionnement (11) et réaliser le processus de commutation dans une phase de couple minimal et/ou réaliser le processus de commutation dans une phase de couple inférieur par rapport au couple moyen.

15. Unité de réglage et/ou d'entraînement selon l'une des revendications précédentes, dans laquelle le dispositif de réglage de la contrainte (14) est conçu pour
- régler la hauteur de la contrainte des mécanismes d'actionnement (11) en modifiant le nombre de mécanismes d'actionnement (11) qui fonctionnent avec un couple dans le premier sens de rotation et/ou en modifiant le nombre de mécanismes d'actionnement qui fonctionnent avec un couple dans le sens de rotation opposé, et/ou
- régler la force de contrainte des mécanismes d'actionnement (11) en modifiant de manière variable l'étalement des vitesses de rotation théoriques (ω_{sοll}, ₘₒₜ) des mécanismes d'actionnement (11), et/ou
- prédéfinir une vitesse de rotation théorique (ω_{sοll, mot}) pour au moins un des mécanismes d'actionnement (11), laquelle diffère d'une valeur de 100 à 500 tr/min de la vitesse de rotation théorique (ω_{sοll, mot}) prédéfinie pour au moins un autre mécanisme d'actionnement (11), et/ou
- modifier les caractéristiques du moteur des mécanismes d'actionnement (11), et/ou
- prédéfinir un couple théorique (Mₛₒₗₗ₁) pour au moins un des mécanismes d'actionnement (11), lequel couple théorique diffère d'une valeur d'au moins 10 N m, de préférence 15 à 40 N m du couple théorique (Mₛₒₗₗ₂) prédéfini pour l'au moins un autre des mécanismes d'actionnement (11).

16. Unité de réglage et/ou d'entraînement selon l'une des revendications précédentes, dans laquelle le dispositif de commande (12) comprend pour chacun des plusieurs mécanismes d'actionnement (11) un régulateur de vitesse (18a-n) propre au moteur, qui prédéfinit un couple pour le mécanisme d'actionnement (11) respectivement associé et reçoit en retour la vitesse de rotation réelle du mécanisme d'actionnement (11) associé, ainsi qu'un régulateur de vitesse (19) de niveau supérieur aux régulateurs de vitesse (18an) propres aux moteurs, qui est conçu pour prédéfinir, pour les régulateurs de vitesse (18a-n) propres aux moteurs, une vitesse de rotation théorique, le régulateur de vitesse (19) de niveau supérieur comportant des canaux d'entrée pour recevoir plusieurs signaux d'entrée comprenant au moins un angle de rotation théorique (ϕₛₒₗₗ) de l'ensemble (9) à faire tourner et un signal de vitesse du vent (v_{Wind}) et un signal de couple (M_{Wind}) et étant conçu pour déterminer la vitesse de rotation théorique (ω_{sοll}) pour les régulateurs de vitesse (18a-n) propres aux moteurs en fonction dudit angle de rotation théorique (ϕₛₒₗₗ), de la vitesse du vent (v_{Wind}) et du couple (M_{Wind}), les régulateurs de vitesse (18a-n) propres aux moteurs étant conçus pour modifier les caractéristiques du moteur des mécanismes d'actionnement (11) associés en fonction des vitesses de rotation théoriques prédéfinies par le régulateur de vitesse (19) de niveau supérieur, en particulier pour les aplatir en cas d'étalement croissant des vitesses de rotation théoriques.

17. Unité de réglage et/ou d'entraînement selon l'une des revendications précédentes, dans laquelle les au moins deux mécanismes d'actionnement (11), les deux ensembles (8, 9) rotatifs l'un par rapport à l'autre, ainsi que le dispositif de commande forment un module à encastrer prémonté, les deux ensembles (8, 9) rotatifs l'un par rapport à l'autre possédant des moyens de raccordement pour le raccordement à d'autres composants de l'éolienne, les ensembles (8, 9) rotatifs l'un par rapport à l'autre formant des bagues de palier d'un palier à roulement de grandes dimensions et/ou d'un palier lisse (7) et les mécanismes d'actionnement (11) étant disposés à l'intérieur d'un espace intérieur, qui est limité par les bagues de palier, le palier à roulement de grandes dimensions et/ou le palier lisse formant un palier azimutal (7), qui comporte d'un côté des moyens de raccordement pour le raccordement à un mât (2) d'une éolienne (1) et d'un autre côté des moyens de raccordement pour le raccordement d'une salle des machines (24) de l'éolienne (1) et/ou d'une partie de mât portant la salle des machines (24).

18. Unité de réglage et/ou d'entraînement selon l'une des revendications précédentes, dans laquelle au moins un des mécanismes d'actionnement (11), qui est fixé sur un des ensembles (8), comporte une roue d'entraînement, en particulier un pignon (25), qui est en prise de roulement avec une bague, en particulier une couronne dentée, qui est fixée sur l'autre ensemble (9) et est supporté, en particulier supporté de manière au moins approximativement symétrique, par au moins deux paliers (L1, L2) des deux côtés de la roue d'entraînement, les deux paliers (L1, L2) étant tous les deux fixés directement ou indirectement sur l'ensemble (8), sur lequel le mécanisme d'actionnement (11) est fixé, un arbre (W) portant ladite roue d'entraînement, en particulier ledit pignon (25), étant réalisé de manière à pouvoir être détaché d'un mécanisme de transmission et/ou moteur du mécanisme d'actionnement (11) et/ou de manière à pouvoir être raccordé, en particulier assemblé, en transmettant un couple.

19. Unité de réglage et/ou d'entraînement selon l'une des revendications précédentes, dans laquelle un dispositif de détermination du couple est associé à au moins un des mécanismes d'actionnement (11) pour déterminer le couple de charge agissant à l'arrêt sur le mécanisme d'actionnement (11), le dispositif de détermination du couple comportant un disque de mesure du couple, qui est prévu entre un stator d'un moteur électrique du mécanisme d'actionnement (11) et un frein ou entre ledit stator et une bride de raccordement du mécanisme d'actionnement.

20. Éolienne comprenant une unité de réglage et/ou d'entraînement, qui est réalisée selon l'une des revendications précédentes.

21. Procédé de commande d'une unité de réglage, qui est réalisée selon l'une des revendications 1 à 19, dans lequel les charges individuelles des différents mécanismes d'actionnement (11) sont surveillées au moyen de dispositifs de détermination de la charge (110), **caractérisé en ce que** les mécanismes d'actionnement (11) communiquent directement entre eux et réagissent à des signaux de charge (110s) provenant des dispositifs de détermination de la charge (110) d'autres mécanismes d'actionnement (11), un mécanisme d'actionnement (11) qui reçoit le signal de charge (110s) modifiant, lors de la réception d'un signal de charge (110s) provenant d'un autre mécanisme d'actionnement (11), qui indique qu'une surcharge dudit autre mécanisme d'actionnement (11) est atteinte, son couple fourni à l'aide d'un couple de renfort (ΔM) en fonction du signal de charge (110s) reçu de telle sorte que ledit autre mécanisme d'actionnement (11) est soulagé.

22. Procédé selon la revendication précédente, dans lequel ledit couple de renfort (ΔM) est fourni sans tenir compte, au moins temporairement, du signal de réglage du couple théorique du dispositif de commande (12) de niveau supérieur, au moins un des mécanismes d'actionnement étant, lors de la rotation des ensembles l'un par rapport à l'autre et/ou quand les ensembles sont à l'arrêt, commandé de telle manière que le mécanisme d'actionnement génère un couple dans un sens de rotation, et au moins un autre mécanisme d'actionnement étant commandé de manière à générer un couple dans l'autre sens de rotation, opposé, pour contraindre les mécanismes d'actionnement lors de la rotation des ensembles l'un par rapport à l'autre, la force de contrainte des mécanismes d'actionnement l'un par rapport à l'autre étant réglée de manière variable en fonction d'une charge extérieure variable agissant sur les ensembles à régler et/ou en fonction de la réaction des mécanismes d'actionnement à une telle charge variable extérieure.
